# EUROPEAN PATENT SPECIFICATION

(11) **EP 4 074 538 B1**
(45) Date of publication and mention of the grant of the patent: **30.09.2026**
(21) Application number: 20901807.6
(22) Date of filing: 02.11.2020
(51) Int. Cl.: B60L 15/20, B60L 15/32, B60R 16/023, B62D 5/04, B60K 28/16, B60W 30/18, B60W 30/20, B60L 3/10

(54) **DRIVE ANTI-SLIP CONTROL METHOD AND APPARATUS, AND DRIVE ANTI-SLIP CONTROL SYSTEM**
ANTISCHLUPFREGELUNGSVERFAHREN UND -VORRICHTUNG UND ANTISCHLUPFREGELUNGSSYSTEM FÜR ANTRIEBE
PROCÉDÉ ET APPAREIL DE COMMANDE ANTIPATINAGE DE CONDUITE, ET SYSTÈME DE COMMANDE ANTIPATINAGE DE CONDUITE

(30) Priority: 16.12.2019 CN 201911291825
(43) Date of publication of application: 19.10.2022
(73) Proprietor: Yinwang Intelligent Technologies Co., Ltd., Shenzhen, Guangdong 518110 (CN)
(72) Inventor: TENG, Ting, Shenzhen, Guangdong 518129 (CN); JIN, Biao, Shenzhen, Guangdong 518129 (CN); YANG, Lulu, Shenzhen, Guangdong 518129 (CN)
(74) Representative: Thun, Clemens
(86) International application number: PCT/CN2020/125811
(87) International publication number: WO 2021/120897

(56) References cited:
- CN-A- 104 228 607
- CN-A- 105 015 363
- CN-A- 105 751 919
- CN-A- 109 624 732
- CN-A- 110 341 497
- DE-A1- 102010 062 387
- KR-A- 20130 142 347
- KR-B1- 101 091 484
- US-A1- 2013 231 838
- US-A1- 2016 221 468

## Description

### TECHNICAL FIELD

This application relates to the field of electric vehicles, and more specifically, to an anti-slip control method, an anti-slip control apparatus, and an anti-slip control system.

### BACKGROUND

When a vehicle accelerates on a road (for example, a wet road or a frozen road) with low adhesion, driving force of the vehicle is higher than the adhesion to the road. Consequently, the vehicle slips, and driving safety is reduced. In this case, a vehicle control unit (vehicle control unit, VCU) of the vehicle may adjust a motor rotation speed of a motor in the vehicle, so that driving force provided by the motor for the vehicle matches the adhesion to the road, to reduce a vehicle slip rate, prevent vehicle slipping, and improve driving safety.

In a process in which the VCU adjusts the motor rotation speed, the motor rotation speed of the motor fluctuates repeatedly. When a rotation speed change of the motor rotation speed within a specific time exceeds a threshold, the motor jitters and drives the vehicle to jitter. Correspondingly, a driver feels that the vehicle jitters, and consequently driving experience of the driver is reduced. Therefore, jitter elimination essentially means controlling motor torque to control the motor rotation speed, so that the motor rotation speed fluctuates within a specific range and the driver does not feel the fluctuation of the motor rotation speed, thereby improving user experience.

Currently, an actual rotation speed signal of the motor is filtered by using the VCU, to obtain a disturbance signal. Then, the VCU determines disturbance compensation torque of the motor based on the disturbance signal, and compensates for, by using the disturbance compensation torque, motor torque corresponding to the disturbance signal, to offset vehicle jitter caused by the motor torque corresponding to the disturbance signal. However, the disturbance signal obtained through filtering includes a disturbance signal component that causes vehicle jitter, and also includes an amplitude component of a non-jitter rotation speed signal that does not cause vehicle jitter. This manner of determining the compensation torque directly based on the disturbance signal obtained through filtering is inaccurate, and may cause overcompensation for the motor torque of the motor. Consequently, vehicle slipping cannot be prevented in time.

The document US 2013/231838 A1 shows a device for estimating a vehicle body vibration and a controller for suppressing vehicle body vibration.

The document KR 101 091 484 B1 shows a shock relieving apparatus to be used in a hybrid vehicle, which is able to calculate vibration compensation values with respect to a speed vibration of a driving shaft.

### SUMMARY

The present invention is defined by the independent claims. Further advantageous developments are shown by the dependent claims.

This application provides an anti-slip control method, an anti-slip control apparatus, and an anti-slip control system, to improve accuracy of calculating disturbance compensation torque of a motor, and help prevent vehicle slipping in time when vehicle jitter is suppressed.

According to a first aspect, an anti-slip control method is provided. The method includes: obtaining a rotation speed signal of a motor, and performing filtering processing on the rotation speed signal to obtain a first disturbance signal, where the first disturbance signal is a signal that causes rotation speed disturbance in the motor; performing, based on a pre-stored motor rotation speed dead zone, dead zone processing on the first disturbance signal to obtain a second disturbance signal, where the motor rotation speed dead zone includes an amplitude of a non-jitter rotation speed signal in the rotation speed signal; calculating disturbance compensation torque of the motor based on the second disturbance signal; calculating first motor torque based on a slip rate of a driving wheel, where the driving wheel is a wheel driven by the motor; and compensating for the first motor torque by using the disturbance compensation torque, to obtain second motor torque, where the second motor torque is used by the motor to drive the driving wheel.

Optionally, the disturbance compensation torque is used to compensate for motor torque triggered by the second disturbance signal.

In this embodiment of this application, the second disturbance signal is obtained by performing dead zone processing on the first disturbance signal, to eliminate a signal component of the first disturbance signal in the motor rotation speed dead zone, and the disturbance compensation torque of the motor is determined based on the second disturbance signal, to compensate for the first motor torque to obtain the second motor torque that needs to be provided by the motor for the driving wheel. This improves accuracy of calculating the disturbance compensation torque, and prevents vehicle slipping in time when vehicle jitter is suppressed. To be specific, this avoids a prior-art case in which vehicle slipping cannot be prevented in time due to overcompensation for the motor torque of the motor caused because the disturbance compensation torque is directly calculated based on the first disturbance signal and motor torque corresponding to the amplitude of the non-jitter rotation speed signal in the first disturbance signal is also compensated for.

Optionally, the motor rotation speed dead zone may be understood as an amplitude interval of the rotation speed signal. An amplitude of the rotation speed signal in the interval does not cause rotation speed disturbance in the motor. Alternatively, although rotation speed disturbance occurs in the motor, vehicle jitter is not caused. Therefore, the non-jitter rotation speed signal is a rotation speed signal that does not cause vehicle jitter.

It should be noted that, to improve accuracy of the motor rotation speed dead zone, different motor rotation speed dead zones may be set for motors of different models. To simplify a test procedure, one relatively common motor rotation speed dead zone may be set to correspond to motors of a plurality of modes. The relatively common motor rotation speed dead zone may be set as $\left[-\frac{\frac{2 / 3.6}{R} ∗ i ∗ 60}{2 ∗ π},\frac{\frac{2 / 3.6}{R} ∗ i ∗ 60}{2 ∗ π}\right]$, revolutions per minute (rpm) based on a current test result, where *R* indicates a radius of the driving wheel, *i* indicates a speed reducing ratio of the motor, and *π* indicates pi.

Optionally, the amplitude of the non-jitter rotation speed signal in the motor rotation speed dead zone may be test data of the motor, or test data of another motor of a same model as the motor. This helps improve accuracy of obtaining the second disturbance signal.

According to the invention, the performing, based on a pre-stored motor rotation speed dead zone, dead zone processing on the first disturbance signal to obtain a second disturbance signal includes: performing, based on the pre-stored motor rotation speed dead zone [-*A*₁*,A*₀], dead zone processing on the first disturbance signal *W*₁ by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂, where -*A*₁ indicates a lower amplitude limit of a motor rotation speed in the motor rotation speed dead zone, and *A*₀ indicates an upper amplitude limit of the motor rotation speed in the motor rotation speed dead zone.

In this embodiment of this application, dead zone processing is performed on the first disturbance signal *W*₁ by using the formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂. This helps improve accuracy of determining the second disturbance signal.

In a possible implementation, the performing filtering processing on the rotation speed signal to obtain a first disturbance signal includes: performing filtering processing on the rotation speed signal by using a bandpass filter, to obtain the first disturbance signal.

In this embodiment of this application, filtering is performed on the rotation speed signal of the motor by using the bandpass filter, to obtain the first disturbance signal. This helps improve accuracy of obtaining the first disturbance signal.

Optionally, the bandpass filter is configured to allow a signal in a frequency band from 10 Hz to 20 Hz to pass through and shield a signal in another frequency band. Alternatively, the bandpass filter is configured to allow a signal in a frequency band from 10 Hz to 15 Hz to pass through and shield a signal in another frequency band.

In a possible implementation, the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$*,* where *Tₛ*, indicates a sampling period for collecting the first disturbance signal, *f*₁ indicates a lower frequency limit of a frequency band in which the first disturbance signal is located, and *f*₂ indicates an upper frequency limit of the frequency band in which the first disturbance signal is located.

In this embodiment of this application, the bandpass filter is designed based on the lower frequency limit of the frequency band in which the first disturbance signal is located and the upper frequency limit of the frequency band in which the first disturbance signal is located. This helps improve accuracy of designing the bandpass filter.

In a possible implementation, the determining disturbance compensation torque of the motor based on the second disturbance signal includes: calculating the disturbance compensation torque *dT* based on the second disturbance signal *W*₂ by using a formula $dT = {k}_{p} {W}_{2} + {k}_{i} {\int }_{{t}_{0}}^{t} {W}_{2} dt + {k}_{d} \frac{{dW}_{2}}{dt}$*,* where *kₚ* indicates a proportional adjustment coefficient, *kᵢ* indicates an integral adjustment coefficient, *k_{d}* indicates a derivative adjustment coefficient, *t*₀ indicates a lower time limit of a preset time period, and *t* indicates an upper time limit of the time period.

In this embodiment of this application, the disturbance compensation torque *dT* corresponding to the second disturbance signal *W*₂ is determined based on proportional-integral-derivative (Proportional-Integral-Derivative, PID) control. This helps improve reliability of the disturbance compensation torque *dT.*

In a possible implementation, the calculating disturbance compensation torque of the motor based on the second disturbance signal includes: calculating the disturbance compensation torque *dT* based on the second disturbance signal *W₂* by using formulas *dT = -J*(*ε* · sgn(*S*) + *kS*) and $S = \frac{{dW}_{2}}{dt}$, where S indicates a switching function of sliding mode control, *J* indicates equivalent moment of inertia of a vehicle, and *ε* and *k* are parameters of the sliding mode control, where *ε* > 0, and *k* > 0.

In this embodiment of this application, the disturbance compensation torque *dT* corresponding to the second disturbance signal *W*₂ is determined based on the sliding mode control (sliding mode control, SMC). This helps simplify a process of calculating the disturbance compensation torque *dT .*

According to a second aspect, an anti-slip control apparatus is provided. The apparatus includes: a filtering unit, configured to: obtain a rotation speed signal of a motor, and perform filtering processing on the rotation speed signal to obtain a first disturbance signal, where the first disturbance signal is a signal that causes motor rotation speed disturbance in the motor; and a processing unit, configured to: perform, based on a pre-stored motor rotation speed dead zone, dead zone processing on the first disturbance signal obtained by the filtering unit, to obtain a second disturbance signal, where the motor rotation speed dead zone includes an amplitude of a non-jitter rotation speed signal in the rotation speed signal; calculate disturbance compensation torque of the motor based on the second disturbance signal; calculate first motor torque based on a slip rate of a driving wheel, where the driving wheel is a wheel driven by the motor; and compensate for the first motor torque by using the disturbance compensation torque, to obtain second motor torque, where the second motor torque is used by the motor to drive the driving wheel.

Optionally, the disturbance compensation torque is used to compensate for motor torque triggered by the second disturbance signal.

In this embodiment of this application, the second disturbance signal is obtained by performing dead zone processing on the first disturbance signal, to eliminate a signal component of the first disturbance signal in the motor rotation speed dead zone, and the disturbance compensation torque of the motor is determined based on the second disturbance signal, to compensate for the first motor torque to obtain the second motor torque that needs to be provided by the motor for the driving wheel. This improves accuracy of calculating the disturbance compensation torque, and prevents vehicle slipping in time when vehicle jitter is suppressed. To be specific, this avoids a prior-art case in which vehicle slipping cannot be prevented in time due to overcompensation for the motor torque of the motor caused because the disturbance compensation torque is directly calculated based on the first disturbance signal and motor torque corresponding to the amplitude of the non-jitter rotation speed signal in the first disturbance signal is also compensated for.

According to the invention, the processing unit is further configured to: perform, based on the pre-stored motor rotation speed dead zone [-*A*₁,*A*₀], dead zone processing on the first disturbance signal *W* by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂, where -*A*₁ indicates a lower amplitude limit of a motor rotation speed in the motor rotation speed dead zone, and *A*₀ indicates an upper amplitude limit of the motor rotation speed in the motor rotation speed dead zone.

In this embodiment of this application, dead zone processing is performed on the first disturbance signal *W*₁ by using the formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂*.* This helps improve accuracy of determining the second disturbance signal.

Optionally, the filtering unit may be a bandpass filter, to improve accuracy of obtaining the first disturbance signal.

In a possible implementation, the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$*,* where *Tₛ* indicates a sampling period for collecting the first disturbance signal, *f*₁ indicates a lower frequency limit of a frequency band in which the first disturbance signal is located, and *f*₂ indicates an upper frequency limit of the frequency band in which the first disturbance signal is located.

In this embodiment of this application, the bandpass filter is designed based on the lower frequency limit of the frequency band in which the first disturbance signal is located and the upper frequency limit of the frequency band in which the first disturbance signal is located. This helps improve accuracy of designing the bandpass filter.

In a possible implementation, the processing unit is further configured to: calculate the disturbance compensation torque *dT* based on the second disturbance signal *W*₂ and a formula $dT = {k}_{p} {W}_{2} + {k}_{i} {\int }_{{t}_{0}}^{t} {W}_{2} dt + {k}_{d} \frac{{dW}_{2}}{dt}$, where *kₚ* indicates a proportional adjustment coefficient, *kᵢ* indicates an integral adjustment coefficient, *k_{d}* indicates a derivative adjustment coefficient, *t*₀ indicates a lower time limit of a preset time period, and *t* indicates an upper time limit of the time period.

In this embodiment of this application, the disturbance compensation torque *dT* corresponding to the second disturbance signal *W*₂ is determined based on PID control. This helps improve reliability of the disturbance compensation torque *dT*.

In a possible implementation, the processing unit is further configured to: calculate the disturbance compensation torque *dT* based on the second disturbance signal *W*₂ by using formulas *dT = -J*(*ε* · sgn(*S*) + *kS*) and $S = \frac{{dW}_{2}}{dt}$, where S indicates a switching function of sliding mode control, *J* indicates equivalent moment of inertia of a vehicle, and *ε* and *k* are parameters of the sliding mode control, where *ε* > 0, and *k* > 0.

In this embodiment of this application, the disturbance compensation torque *dT* corresponding to the second disturbance signal *W*₂ is determined based on the SMC. This helps simplify a process of calculating the disturbance compensation torque *dT.*

According to a third aspect, an anti-slip control system is provided. The system includes: a filter, configured to: obtain a rotation speed signal of a motor, and perform filtering processing on the rotation speed signal to obtain a first disturbance signal, where the first disturbance signal is a signal that causes motor rotation speed disturbance in the motor; and a controller, configured to: perform, based on a pre-stored motor rotation speed dead zone, dead zone processing on the first disturbance signal that is output by the filter, to obtain a second disturbance signal, where the motor rotation speed dead zone includes an amplitude of a non-jitter rotation speed signal in the rotation speed signal; obtain the second disturbance signal based on a processor, and calculate disturbance compensation torque of the motor; calculate first motor torque based on a slip rate of a driving wheel, where the driving wheel is a wheel driven by the motor; and compensate for the first motor torque by using the disturbance compensation torque, to obtain second motor torque, where the second motor torque is used by the motor to drive the driving wheel.

In this embodiment of this application, the second disturbance signal is obtained by performing dead zone processing on the first disturbance signal, to eliminate a signal component of the first disturbance signal in the motor rotation speed dead zone, and the disturbance compensation torque of the motor is determined based on the second disturbance signal, to compensate for the first motor torque to obtain the second motor torque that needs to be provided by the motor for the driving wheel. This improves accuracy of calculating the disturbance compensation torque, and prevents vehicle slipping in time when vehicle jitter is suppressed. To be specific, this avoids a prior-art case in which vehicle slipping cannot be prevented in time due to overcompensation for the motor torque of the motor caused because the disturbance compensation torque is directly calculated based on the first disturbance signal and motor torque corresponding to the amplitude of the non-jitter rotation speed signal in the first disturbance signal is also compensated for.

According to the invention, the controller is further configured to: perform, based on the pre-stored motor rotation speed dead zone [-*A*₁,*A*₀], dead zone processing on the first disturbance signal *W*₁ by using a formula ${W}_{2} = \left\{\begin{matrix}{W}_{1} - {A}_{0} , & {W}_{1} > {A}_{0} \\ 0 , & - {A}_{1} \leq {W}_{1} \leq {A}_{0} \\ {W}_{1} + {A}_{1} , & {W}_{1} < - {A}_{1}\end{matrix}\right.$, to obtain the second disturbance signal *W*₂, where -*A*₁ indicates a lower amplitude limit of a motor rotation speed in the motor rotation speed dead zone, and *A*₀ indicates an upper amplitude limit of the motor rotation speed in the motor rotation speed dead zone.

In this embodiment of this application, dead zone processing is performed on the first disturbance signal *W*₁ by using the formula ${W}_{2} = \left\{\begin{matrix}{W}_{1} - {A}_{0} , & {W}_{1} > {A}_{0} \\ 0 , & - {A}_{1} \leq {W}_{1} \leq {A}_{0} \\ {W}_{1} + {A}_{1} , & {W}_{1} < - {A}_{1}\end{matrix}\right.$, to obtain the second disturbance signal *W*₂. This helps improve accuracy of determining the second disturbance signal.

Optionally, the filter may be a bandpass filter, to improve accuracy of obtaining the first disturbance signal.

In a possible implementation, the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$, where *Tₛ* indicates a sampling period for collecting the first disturbance signal, *f*₁ indicates a lower frequency limit of a frequency band in which the first disturbance signal is located, and *f*₂ indicates an upper frequency limit of the frequency band in which the first disturbance signal is located.

In this embodiment of this application, the bandpass filter is designed based on the lower frequency limit of the frequency band in which the first disturbance signal is located and the upper frequency limit of the frequency band in which the first disturbance signal is located. This helps improve accuracy of designing the bandpass filter.

In a possible implementation, the controller is further configured to: calculate the disturbance compensation torque *dT* based on the second disturbance signal *W*₂ by using a formula $dT = {k}_{p} {W}_{2} + {k}_{i} {\int }_{{t}_{0}}^{t} {W}_{2} dt + {k}_{d} \frac{{dW}_{2}}{dt}$, where *kₚ* indicates a proportional adjustment coefficient, *kᵢ* indicates an integral adjustment coefficient, *k_{d}* indicates a derivative adjustment coefficient, *t*₀ indicates a lower time limit of a preset time period, and *t* indicates an upper time limit of the time period.

In this embodiment of this application, the disturbance compensation torque *dT* corresponding to the second disturbance signal *W*₂ is determined based on PID control. This helps improve reliability of the disturbance compensation torque *dT.*

In a possible implementation, the controller is further configured to: calculate the disturbance compensation torque *dT* based on the second disturbance signal *W₂* by using formulas *dT* = -*J*(*ε* · sgn(*S*) + *kS*) and $S = \frac{{dW}_{2}}{dt}$, where S indicates a switching function of sliding mode control, *J* indicates equivalent moment of inertia of a vehicle, and *ε* and *k* are parameters of the sliding mode control, where *ε* > 0, and *k* > 0.

In this embodiment of this application, the disturbance compensation torque *dT* corresponding to the second disturbance signal *W*₂ is determined based on the SMC. This helps simplify a process of calculating the disturbance compensation torque *dT.*

In a possible implementation, the controller is a vehicle control unit (vehicle control unit, VCU).

According to a fourth aspect, a controller is provided. The controller may be an independent controller in a vehicle, or may be a chip in the vehicle. The controller may include a processor and a memory. The memory is configured to store instructions, and the processor executes the instructions stored in the memory, so that the controller performs the method in the foregoing aspect.

According to a fifth aspect, a method for determining a motor rotation speed dead zone of a motor is provided. The method includes: collecting a dataset of the motor in a first frequency band, where the dataset includes an amplitude of a non-jitter rotation speed signal in the first frequency band; and determining the motor rotation speed dead zone of the motor based on an amplitude of a rotation speed signal in the dataset.

In this embodiment of this application, the motor rotation speed dead zone of the motor is determined based on the dataset of the amplitude of the non-jitter rotation speed signal in the first frequency band. In this way, when disturbance compensation torque of the motor is subsequently determined, the motor rotation speed dead zone may be used to perform dead zone processing on a first disturbance signal in the first frequency band, to eliminate a signal component of the first disturbance signal in the motor rotation speed dead zone. This helps improve accuracy of determining the disturbance compensation torque.

Optionally, the first frequency band may be understood as a frequency band in which a motor rotation speed that triggers vehicle jitter is located.

In a possible implementation, the method further includes: collecting a motor rotation speed disturbance signal of the motor when a vehicle jitters, to obtain a motor rotation speed dataset; and performing spectrum analysis on the motor rotation speed disturbance signal in the motor rotation speed dataset, to determine the first frequency band [*f₁,f₂*]*.*

In this embodiment of this application, spectrum analysis is performed on the motor rotation speed disturbance signal in the motor rotation speed dataset, to determine the first frequency band. This helps improve accuracy of determining the first frequency band.

Optionally, spectrum analysis may be performed on the motor rotation speed in the motor rotation speed dataset through Fourier transform. In other words, spectrum analysis is performed on the motor rotation speed disturbance signal in the motor rotation speed dataset based on formulas $X \left(k\right) = {\sum }_{n = 0}^{N - 1} x \left(n\right) {W}_{N}^{kn}$ and ${W}_{N} = {e}^{- j \frac{2 π}{N}}$, to obtain the first frequency band [*f*₁,*f*₂], where *x*(*n*) indicates a discrete motor rotation speed disturbance signal in the motor rotation speed dataset, *k* = 0, 1, ..., or *N* -1, and *N* indicates a total quantity of motor rotation speed disturbance signals in the motor rotation speed dataset.

According to a sixth aspect, a computing device is provided. The apparatus includes: an obtaining unit, configured to obtain a dataset of a motor in a first frequency band, where the dataset includes an amplitude of a non-jitter rotation speed signal in the first frequency band; and a processing unit, configured to determine a motor rotation speed dead zone of the motor based on a motor rotation speed in the dataset of the amplitude of the non-jitter rotation speed signal.

In this embodiment of this application, the motor rotation speed dead zone of the motor is determined based on the dataset. In this way, when disturbance compensation torque of the motor is subsequently determined, the motor rotation speed dead zone may be used to perform dead zone processing on a first disturbance signal in the first frequency band, to eliminate a signal component of the first disturbance signal in the motor rotation speed dead zone. This helps improve accuracy of determining the disturbance compensation torque.

In a possible implementation, the obtaining unit is further configured to collect a motor rotation speed disturbance signal of the motor when a vehicle jitters, to obtain a motor rotation speed dataset; and the processing unit is further configured to perform spectrum analysis on the motor rotation speed disturbance signal in the motor rotation speed dataset, to determine the first frequency band [*f*₁,*f*₂].

In this embodiment of this application, spectrum analysis is performed on the motor rotation speed disturbance signal in the motor rotation speed dataset, to determine the first frequency band. This helps improve accuracy of determining the first frequency band.

Optionally, spectrum analysis may be performed on the motor rotation speed in the motor rotation speed dataset through Fourier transform. In other words, spectrum analysis is performed on the motor rotation speed disturbance signal in the motor rotation speed dataset based on formulas $X \left(k\right) = {\sum }_{n = 0}^{N - 1} x \left(n\right) {W}_{N}^{kn}$ and ${W}_{N} = {e}^{- j \frac{2 π}{N}}$, to obtain the first frequency band [*f*₁,f₂], where *x*(*n*) indicates a discrete motor rotation speed disturbance signal in the motor rotation speed dataset, *k* = 0, 1, ..., or *N* -1, and *N* indicates a total quantity of motor rotation speed disturbance signals in the motor rotation speed dataset.

According to a seventh aspect, a computer program product is provided. The computer program product includes computer program code, and when the computer program code is run on a computer, the computer is enabled to perform the method in the foregoing aspect.

It should be noted that the computer program code can be completely or partially stored in a first storage medium. The first storage medium can be encapsulated with a processor, or encapsulated separately from a processor. This is not specifically limited in this embodiment of this application.

According to an eighth aspect, a computer-readable medium is provided. The computer-readable medium stores program code, and when the computer program code is run on a computer, the computer is enabled to perform the method in the foregoing aspect.

### BRIEF DESCRIPTION OF DRAWINGS

FIG. 1 is a schematic diagram of an architecture of an acceleration slip regulation system 100;
FIG. 2 is a schematic diagram of a relationship between function modules required by a VCU to determine a motor torque requirement;
FIG. 3 is a flowchart of an anti-slip control method according to an embodiment of this application;
FIG. 4 is a schematic diagram of a spectrum of a motor rotation speed dataset that causes vehicle jitter according to an embodiment of this application;
FIG. 5 is a flowchart of a method for determining a motor rotation speed dead zone according to an embodiment of this application;
FIG. 6 is a flowchart of a method for determining a motor rotation speed dead zone according to another embodiment of this application;
FIG. 7 is a schematic diagram of an anti-slip control apparatus according to an embodiment of this application;
FIG. 8 is a schematic block diagram of an anti-slip control system according to an embodiment of this application;
FIG. 9 is a schematic block diagram of a computing device according to an embodiment of this application; and
FIG. 10 is a schematic block diagram of a computing device according to another embodiment of this application.

### DESCRIPTION OF EMBODIMENTS

The following describes the technical solutions of this application with reference to the accompanying drawings.

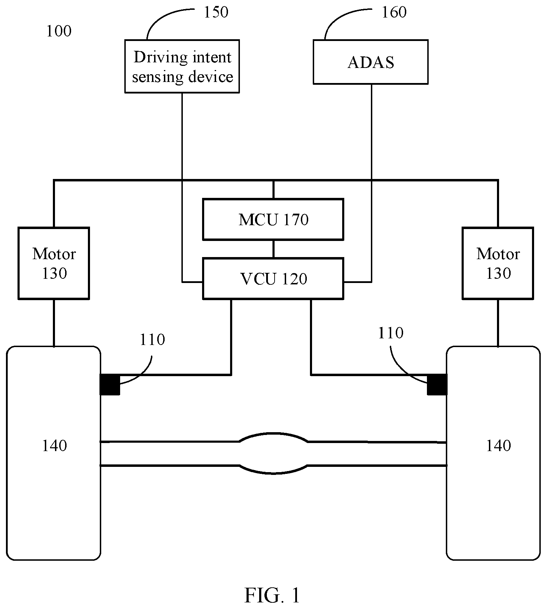

For ease of understanding this application, an acceleration slip regulation system to which embodiments of this application are applicable is first described with reference to FIG. 1. An acceleration slip regulation (acceleration slip regulation, ASR) system is designed to prevent a driving wheel from slipping in a process of driving a vehicle (especially in a process of starting, accelerating, or turning the vehicle), so as to maintain traveling direction stability, a vehicle steering control capability, and vehicle acceleration performance in the vehicle driving process.

FIG. 1 is a schematic diagram of an architecture of an acceleration slip regulation system 100. The acceleration slip regulation system 100 shown in FIG. 1 includes on-board sensors 110, a VCU 120, motors 130, wheels 140, a driving intent sensing device 150, an advanced driving assistance system (Advanced Driving Assistant System, ADAS) 160, and a motor control unit (Motor Control Unit, MCU) 170.

The on-board sensor 110 is configured to: collect a traveling parameter of a vehicle such as a wheel rotation speed of the driving wheel in the vehicle, a yawing angular velocity of the vehicle, a longitudinal acceleration of the vehicle, or a lateral acceleration of the vehicle, and send the collected traveling parameter of the vehicle to the VCU 120.

The driving intent sensing device 150 is configured to sense a driving intent of a driver. When sensing the driving intent of the driver, the driving intent sensing device 150 may be configured to: collect information such as a steering wheel angle, a pedal opening, and a vehicle gear position, and send the collected information to the VCU.

The ADAS 160 is configured to calculate a dynamics parameter required by the vehicle, to adjust a traveling status of the vehicle. The dynamics parameter may include required braking torque, required driving torque, and the like.

The VCU 120 is configured to determine a control policy of the vehicle based on information reported by one or more of the on-board sensor 110, the driving intent sensing device 150, and the ADAS 160.

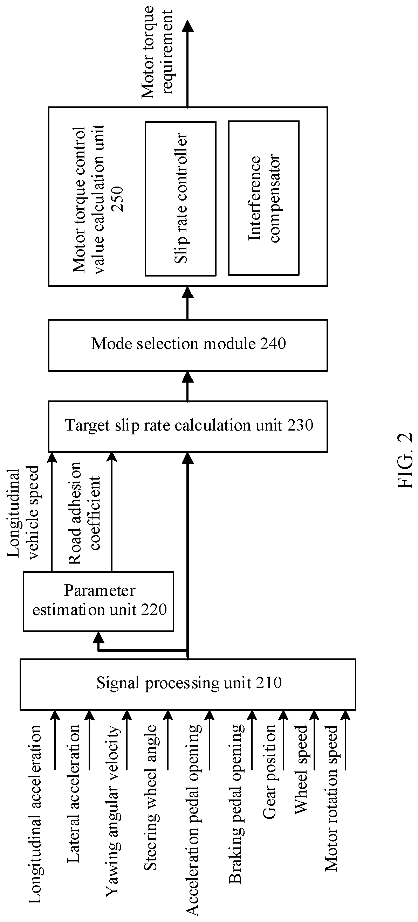

For example, the VCU calculates a slip rate of the driving wheel based on a wheel rotation speed; if the slip rate exceeds a target slip rate range, the VCU may send a control signal to the motor control unit 170; and the motor control unit 170 controls torque of the motor 130, to control the wheel rotation speed of the driving wheel. A relationship between function modules required by the VCU to calculate the motor torque is described below with reference to FIG. 2. For brevity, details are not described herein.

The MCU 170 is configured to control a rotation status of the motor 130 based on instructions of the VCU.

The motor 130, commonly referred to as a motor, is configured to provide driving force for the wheel in the vehicle based on instructions of the MCU 170, to drive the driving wheel 140 to rotate. Specifically, a motor rotation speed that needs to be adjusted may be determined based on the instructions of the MCU 170, to control the wheel rotation speed of the driving wheel 140.

For ease of understanding, FIG. 2 is a schematic diagram of a relationship between function modules required by the VCU to determine a motor torque requirement. The motor torque requirement may be understood as that the MCU needs to control motor torque implemented by the motor, to drive the driving wheel to rotate.

The VCU shown in FIG. 2 includes a signal processing unit 210, a parameter estimation unit 220, a target slip rate calculation unit 230, a mode selection module 240, and a motor torque control value calculation unit 250.

The signal processing unit 210 is configured to perform data processing on a traveling parameter of the vehicle. The traveling parameter of the vehicle may include: a longitudinal acceleration of the vehicle, a lateral acceleration of the vehicle, a yawing angular velocity of the vehicle, a steering wheel angle of the vehicle, an acceleration pedal opening of the vehicle, a braking pedal opening of the vehicle, a gear position of the vehicle, a wheel speed of the wheel in the vehicle, a motor rotation speed of the motor in the vehicle, or the like.

The parameter estimation module 220 is configured to: perform parameter estimation based on the traveling parameter that is output by the signal processing unit, and determine parameters such as a longitudinal vehicle speed of the vehicle and a road adhesion coefficient of a road on which the vehicle travels.

The target slip rate calculation module 230 is configured to determine a target slip rate of the vehicle based on the parameters (for example, the longitudinal vehicle speed of the vehicle and the road adhesion coefficient of the road on which the vehicle travels) that are output by the parameter estimation module 220 and another parameter that is output by the signal processing unit 210.

The mode selection module 240 is configured to determine, based on the target slip rate of the vehicle that is calculated by the target slip rate calculation module 230, that the vehicle needs to activate the control value calculation unit 250 or does not activate the control value calculation unit 250.

Specifically, when the target slip rate meets a preset condition (for example, is greater than a slip rate threshold), the vehicle needs to enter an anti-slip control mode, and the mode selection module 240 determines that the vehicle needs to activate the control value calculation unit 250. When the target slip rate does not meet the preset condition (for example, is less than the slip rate threshold), the vehicle does not need to enter the anti-slip control mode, and the mode selection module 240 determines to exit a mode of calculating motor torque by the control value calculation unit 250.

The motor torque control value calculation unit 250 is configured to determine, based on control of the mode selection module 240, whether to calculate motor torque required by the MCU.

Based on the foregoing descriptions, in a process in which the VCU 120 adjusts the motor rotation speed of the motor 130, the motor rotation speed of the motor 130 repeatedly fluctuates. When a rotation speed change of the motor 130 within a specific time exceeds a threshold, the motor 130 jitters and drives the vehicle to jitter. Correspondingly, the driver feels that the vehicle jitters, and consequently driving experience of the driver is reduced.

Currently, a slip rate controller of the motor torque control value calculation unit 250 in the VCU 120 calculates first motor torque of the motor based on the slip rate of the vehicle. In addition, the VCU 120 performs filtering processing on an actual rotation speed signal of the motor 130 to obtain a disturbance signal. Then, an interference compensator of the motor torque control value calculation unit 250 in the VCU 120 determines disturbance compensation torque of the motor based on the disturbance signal, and compensates for, by using the disturbance compensation torque, motor torque corresponding to the motor rotation speed disturbance signal. Finally, the MCU motor torque requirement is calculated based on the first motor torque that is calculated by the slip rate controller and the disturbance compensation torque that is calculated by the interference compensator, to offset vehicle jitter caused by the motor torque corresponding to the motor rotation speed disturbance signal.

However, the disturbance signal obtained through filtering includes a disturbance signal component that causes vehicle jitter, and also includes a component of a non-jitter rotation speed signal that does not cause vehicle jitter. This manner of determining the compensation torque directly based on the disturbance signal is inaccurate, and may cause overcompensation for the motor torque of the motor 130. Consequently, vehicle slipping cannot be prevented in time.

To avoid the problem, this application provides a new anti-slip control solution. Dead zone processing is performed on the disturbance signal (also referred to as a "first disturbance signal") obtained through filtering, to eliminate an amplitude of a non-jitter rotation speed signal in the first disturbance signal to obtain a relatively accurate second disturbance signal, and then disturbance compensation torque is calculated based on the second disturbance signal, to compensate for the first motor torque to obtain second motor torque that needs to be provided by the motor for the driving wheel. This improves accuracy of calculating the disturbance compensation torque, and prevents vehicle slipping in time when vehicle jitter is suppressed. In other words, the anti-slip control solution in this application may be understood as an improvement on the solution in which the interference compensator of the motor torque control value calculation unit 250 calculates the disturbance compensation torque.

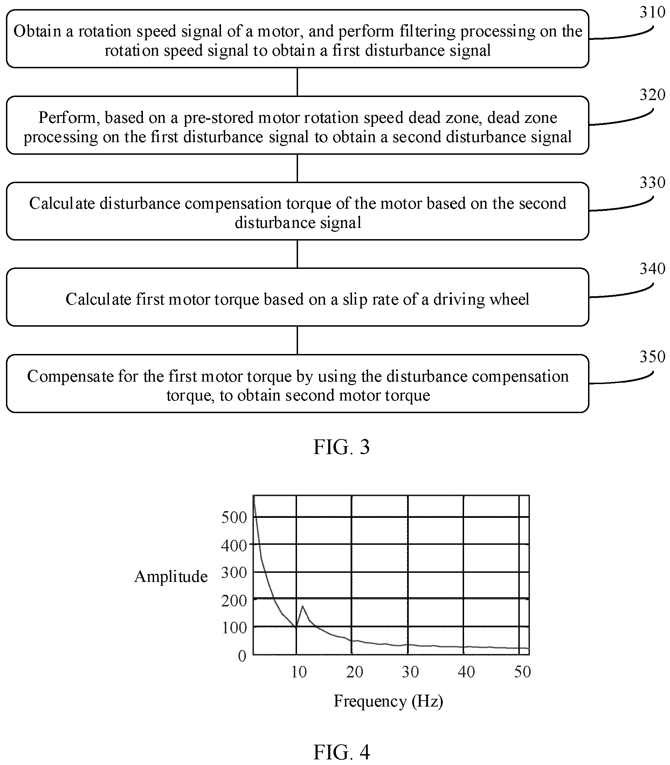

The following describes an anti-slip control method according to an embodiment of this application with reference to FIG. 3. It should be understood that the method shown in FIG. 3 may be performed by the VCU 120 shown in FIG. 1, or may be performed by another controller in a vehicle. This is not limited in this embodiment of this application.

FIG. 3 is a flowchart of the anti-slip control method according to an embodiment of this application. The method shown in FIG. 3 includes step 310 to step 350.

310: Obtain a rotation speed signal of a motor, and perform filtering processing on the rotation speed signal to obtain a first disturbance signal, where the first disturbance signal is a signal that causes motor rotation speed disturbance in the motor.

The first disturbance signal may be understood as a rotation speed signal that may cause vehicle jitter. Generally, an amplitude of the first disturbance signal changes dramatically within a period of time.

The first disturbance signal may be generated for many reasons. For example, in an excessive wheel slipping event, load torque of the motor is suddenly greatly reduced. For another example, load torque of a motor corresponding to one or more stuck wheels is suddenly or greatly increased.

It should be understood that the motor may be a motor of any driving wheel in the vehicle. This is not limited in this embodiment of this application.

It should be further understood that performing filtering on the rotation speed signal of the motor in the vehicle to obtain the first disturbance signal may include: performing high-pass filtering on the rotation speed signal to obtain the first disturbance signal.

320: Perform, based on a pre-stored motor rotation speed dead zone, dead zone processing on the first disturbance signal to obtain a second disturbance signal, to eliminate a signal component of the first disturbance signal in the motor rotation speed dead zone, where the motor rotation speed dead zone includes an amplitude of a non-jitter rotation speed signal in the rotation speed signal.

The motor rotation speed dead zone may be understood as an amplitude interval of the rotation speed signal. An amplitude of the rotation speed signal in the interval does not cause rotation speed disturbance in the motor. Alternatively, although rotation speed disturbance occurs in the motor, vehicle jitter is not caused. Therefore, the non-jitter rotation speed signal is a rotation speed signal that does not cause vehicle jitter.

It should be noted that, to improve accuracy of the motor rotation speed dead zone, different motor rotation speed dead zones may be set for motors of different models. To simplify a test procedure, one relatively common motor rotation speed dead zone may be set to correspond to motors of a plurality of modes. The relatively common motor rotation speed dead zone may be set as $\left[-\frac{\frac{2 / 3.6}{R} ∗ i ∗ 60}{2 ∗ π},\frac{\frac{2 / 3.6}{R} ∗ i ∗ 60}{2 ∗ π}\right]$, revolutions per minute (rpm) based on a current test result, where *R* indicates a radius of the driving wheel, *i* indicates a speed reducing ratio of the motor, and *π* indicates pi.

The second disturbance signal may be understood as a disturbance signal that causes vehicle jitter.

Optionally, the amplitude of the non-jitter rotation speed signal in the motor rotation speed dead zone may be test data of the motor, or test data of another motor of a same model as the motor. This helps improve accuracy of obtaining the second disturbance signal.

Optionally, that the motor rotation speed dead zone includes an amplitude of a non-jitter rotation speed signal of the motor includes: The motor rotation speed dead zone includes an amplitude of the non-jitter rotation speed signal of the motor in a frequency band in which the first disturbance signal is located.

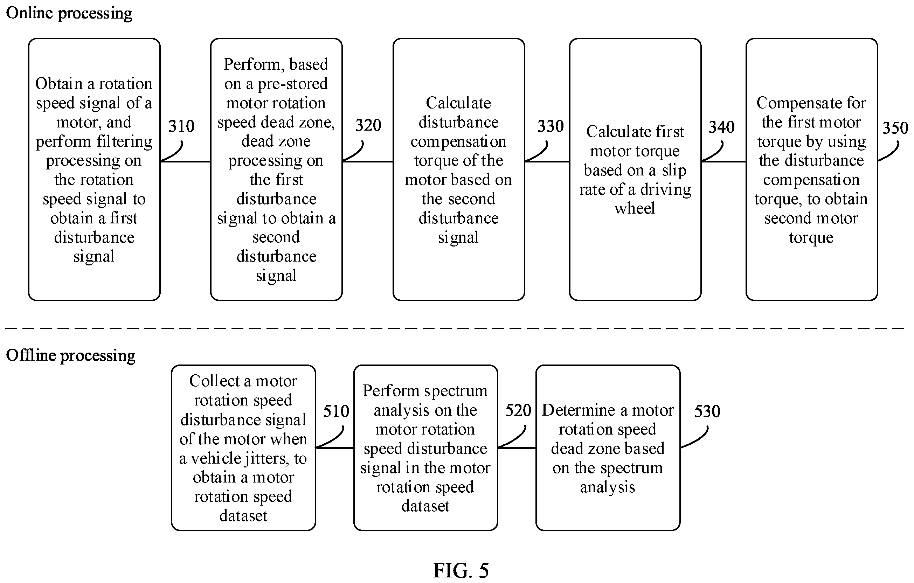

It should be noted that the motor rotation speed dead zone may be obtained by a computing device (for example, a computer) through offline statistics collection. Herein, "offline" is relative to an execution process of the method shown in FIG. 3. In other words, assuming that the method shown in FIG. 3 may be understood as a process of performing online processing on the first disturbance signal, a process in which the computing device tests performance of the motor and obtains the motor rotation speed dead zone may be understood as an offline processing process. Generally, the offline processing process may be performed by a vehicle factory before the vehicle is delivered from the factory. For a specific offline processing process, refer to a method shown in FIG. 5 below. For brevity, details are not described herein again.

Optionally, step 320 includes: performing, based on the motor rotation speed dead zone [-*A*₁,*A*₀], dead zone processing on the first disturbance signal *W*₁ by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂, where -*A*₁ indicates a lower amplitude limit of a motor rotation speed in the motor rotation speed dead zone, and *A*₀ indicates an upper amplitude limit of the motor rotation speed in the motor rotation speed dead zone.

Specifically, when *W*₁*>A*₀, in the first disturbance signal *W*₁, motor torque corresponding to a signal component *W*₁-*A*₀, causes vehicle jitter. Therefore, the signal component *W*₁-*A*₀, needs to be reserved as the second disturbance signal for subsequent disturbance compensation torque calculation.

When *W*₁<-*A*₁, in the first disturbance signal *W*₁, motor torque corresponding to a signal component *W*₁+*A*₁ causes vehicle jitter. Therefore, the signal component *W*₁+*A*₁ needs to be reserved as the second disturbance signal for subsequent disturbance compensation torque calculation.

Because a signal may be basically understood as being formed by sinusoidal signals, during offline processing, a disturbance signal may be considered as a sinusoidal signal for analysis. Therefore, in the motor rotation speed dead zone [-*A*₁,*A*₀], an absolute value of the lower amplitude limit of the motor rotation speed may be equal to an absolute value of the upper amplitude limit of the motor rotation speed, in other words, |*A*₁|=|*A*₀|.

330: Calculate disturbance compensation torque of the motor based on the second disturbance signal.

The disturbance compensation torque is used to compensate for motor torque triggered by the second disturbance signal, and may be mutually offset with motor torque triggered by the second disturbance signal. This prevents vehicle jitter caused by motor jitter that occurs because the motor provides the motor torque triggered by the second disturbance signal.

It should be noted that a specific manner of determining the disturbance compensation torque based on the second disturbance signal may be the same as an existing method for determining disturbance compensation torque, or may be a manner of performing calculation by using another nonlinear control principle. This is not specifically limited in this application. For example, calculation may be performed based on proportional-integral-derivative (Proportional-Integral-Derivative, PID) control or sliding mode control (sliding mode control, SMC).

When the disturbance compensation torque is calculated based on the PID control, the disturbance compensation torque *dT* may be calculated based on the second disturbance signal *W*₂ by using a formula $dT = {k}_{p} {W}_{2} + {k}_{i} {\int }_{{t}_{0}}^{t} {W}_{2} dt + {k}_{d} \frac{{dW}_{2}}{dt}$, where *kₚ* indicates a proportional adjustment coefficient, *kᵢ* indicates an integral adjustment coefficient, *k_{d}* indicates a derivative adjustment coefficient, *t*₀ indicates a lower time limit of a preset time period, and t indicates an upper time limit of the time period.

When the disturbance compensation torque is calculated based on the SMC, the disturbance compensation torque *dT* may be calculated based on the second disturbance signal *W*₂ by using formulas *dT = -J(ε* · sgn(*S*)+ *kS*) and $S = \frac{{dW}_{2}}{dt}$, where S indicates a switching function of a sliding mode controller, *J* indicates equivalent moment of inertia of a motor terminal, and *ε* and *k* are parameters of the sliding mode controller, where *ε* > 0, and *k* > 0.

The equivalent moment of inertia may be understood as that equivalent moment of inertia of the wheel, a halfshaft, a retarder, and the motor in the vehicle is equivalent to the equivalent moment of inertia of the motor terminal.

After the disturbance compensation torque is calculated, the disturbance compensation torque and first motor torque that is determined based on a slip rate may be added to offset partially motor torque that causes vehicle jitter in the first motor torque. In other words, step 340 and step 350 are performed.

340: Calculate the first motor torque based on the slip rate of the driving wheel, where the driving wheel is a wheel driven by the motor.

Specifically, an actual slip rate of the driving wheel may be input into a slip rate controller, and the slip rate controller calculates the first motor torque. The slip rate controller may be a nonlinear controller, for example, a PID controller or a sliding mode controller.

If the PID controller is used as the slip rate controller, after the actual slip rate of the driving wheel controlled by the motor is input into the slip rate controller, the PID controller may calculate a difference *λₑ* between the actual slip rate and a target slip rate. Then the first motor torque *T* is calculated based on the difference *λₑ* by using a formula $T = {k}_{p 1} {λ}_{e} + {k}_{{i}_{1}} {\int }_{{t}_{1}}^{{t}_{2}} {λ}_{e} dt + {k}_{{d}_{1}} \frac{{dλ}_{e}}{dt}$, where *k*_{*p*₁}, indicates a proportional adjustment coefficient of the PID controller, *k*_{*i*₁} indicates an integral adjustment coefficient of the PID controller, *k*_{*d*₁} indicates a derivative adjustment coefficient of the PID controller, *t*₁ indicates a lower time limit of a preset time period, and *t*₂ indicates an upper time limit of the time period.

It should be noted that the preset time period [*t*₁*,t*₂] and the time period [*t,t*₀] for calculating the disturbance compensation torque may be of a same time length, or may be of different time lengths. This is not limited in this embodiment of this application.

It should be understood that there may be one or more wheels driven by the motor. This is not specifically limited in this embodiment of this application.

350: Compensate for the first motor torque by using the disturbance compensation torque, to obtain second motor torque, where the second motor torque is used by the motor to drive the driving wheel.

The second motor torque may be further understood as motor torque that needs to be provided by the motor for the driving wheel.

Optionally, the second motor torque *T*^{*} is calculated based on the first motor torque *T* and the disturbance compensation torque *dT* by using a formula *T^{*} = T + dT.*

In this embodiment of this application, the second disturbance signal is obtained by performing dead zone processing on the first disturbance signal, to eliminate a signal component of the first disturbance signal in the motor rotation speed dead zone, and the disturbance compensation torque of the motor is determined based on the second disturbance signal, to compensate for the first motor torque to obtain the second motor torque that needs to be provided by the motor for the driving wheel. This improves accuracy of calculating the disturbance compensation torque, and prevents vehicle slipping in time when vehicle jitter is suppressed. To be specific, this avoids a prior-art case in which vehicle slipping cannot be prevented in time due to overcompensation for the motor torque of the motor caused because the disturbance compensation torque is directly calculated based on the first disturbance signal and motor torque corresponding to the amplitude of the non-jitter rotation speed signal in the first disturbance signal is also compensated for.

Generally, a frequency band in which a disturbance signal that causes vehicle jitter is located is a fixed frequency band, in other words, the frequency band in which the first disturbance signal is located is a fixed frequency band. For ease of description, the fixed frequency band is referred to as a first frequency band below. It should be understood that the first frequency band may have different value ranges for motors of different models and vehicles of different configurations. For example, the first frequency band may be a frequency band less than 20 Hz. For another example, the first frequency band may alternatively be a frequency band less than 30 Hz.

In a process of performing spectrum analysis on a motor rotation speed dataset that causes vehicle jitter, it is found that a frequency band in which the motor rotation speed dataset that causes vehicle jitter is located may be further narrowed down to a fixed frequency band with a clear range. FIG. 4 is a schematic diagram of a spectrum of the motor rotation speed dataset that causes vehicle jitter according to an embodiment of this application. It can be learned from the spectrum shown in FIG. 4 that a frequency band in which an amplitude of the motor obviously fluctuates is 10 Hz to 20 Hz.

Therefore, filtering processing may be performed on the rotation speed signal of the motor by using a bandpass filter, to improve accuracy of obtaining the disturbance signal. For example, when the first frequency band is a frequency band from 10 Hz to 20 Hz, a wave from 10 Hz to 20 Hz may be selected to be allowed to pass through, and a bandpass filter in another frequency band is shielded, to obtain a first disturbance signal in the frequency band from 10 Hz to 20 Hz. For another example, when the first frequency band is a frequency band from 10 Hz to 15 Hz, a wave from 10 Hz to 15 Hz may be selected to be allowed to pass through, and a bandpass filter in another frequency band is shielded, to obtain a first disturbance signal in the frequency band from 10 Hz to 15 Hz.

In other words, step 310 includes: performing filtering on the rotation speed signal of the motor by using the bandpass filter, to obtain the first disturbance signal. The bandpass filter is configured to: allow a rotation speed signal in the first frequency band to pass through, and shield a rotation speed signal in another frequency band other than the first frequency band.

Optionally, the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, $s = \frac{2}{{T}_{s}} \frac{1 - {z}^{- 1}}{1 + {z}^{- 1}}$, where *Tₛ* indicates a sampling period for collecting the first disturbance signal, *f*₁ indicates a lower frequency limit of the first frequency band, and *f*₂ indicates an upper frequency limit of the first frequency band.

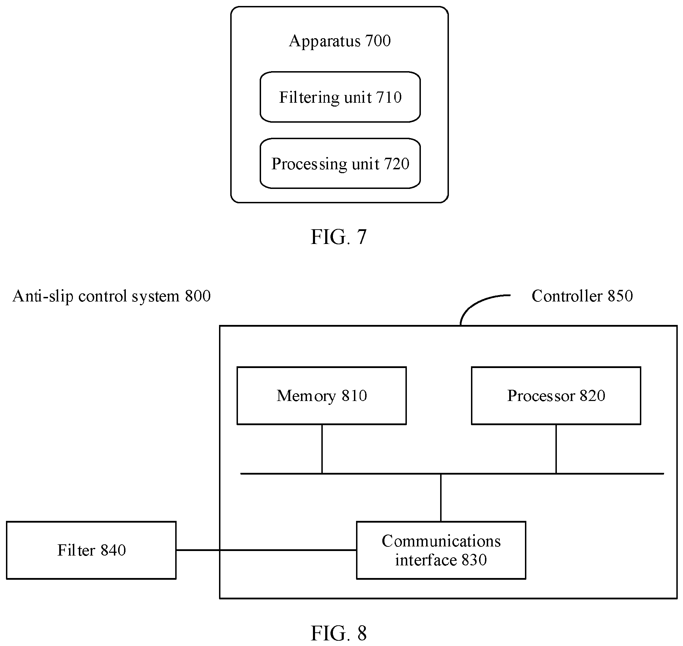

It should be noted that the bandpass filter may be implemented by hardware, or may be implemented by software. This is not limited in this embodiment of this application. When a function of the bandpass filter is implemented by software, hardware for implementing the anti-slip control method in this embodiment of this application may be the same as hardware for implementing an existing anti-slip control method, for example, may be implemented by the VCU shown in FIG. 1. When a function of the bandpass filter is implemented by hardware, a bandpass filter may be newly added based on hardware for implementing the existing anti-slip control method. For a specific hardware structure, refer to an anti-slip control system shown in FIG. 8.

The following describes a process of determining a motor rotation speed dead zone offline according to an embodiment of this application with reference to FIG. 5. FIG. 5 is a flowchart of a method for determining a motor rotation speed dead zone according to an embodiment of this application. The method shown in FIG. 5 may be performed by a computing device. The method shown in FIG. 5 includes step 510 to step 530.

510: Collect a disturbance signal of a motor when a vehicle jitters, to obtain a motor rotation speed dataset.

520: Perform spectrum analysis on the disturbance signal in the motor rotation speed dataset. For example, spectrum analysis may be performed through Fourier transform, wavelet transform, or the like. This is not limited in this embodiment of this application.

If spectrum analysis is performed through Fourier transform, spectrum analysis is performed on the disturbance signal in the motor rotation speed dataset based on formulas $X \left(k\right) = {\sum }_{n = 0}^{N - 1} x \left(n\right) {W}_{N}^{kn}$ and ${W}_{N} = {e}^{- j \frac{2 π}{N}}$, where *x*(*n*) indicates a discrete disturbance signal in the motor rotation speed dataset, *k* = 0, 1, ..., or *N* -1, and *N* indicates a total quantity of disturbance signals in the motor rotation speed dataset.

A relationship between a spectrum amplitude and a frequency may be obtained based on the spectrum analysis: X(k)~kfₛ/N, where fₛ indicates a sampling frequency of the disturbance signal. Finally, it may be learned, through analysis based on the relationship, that a frequency band in which a spectrum attenuation section sharply increases is a first frequency band [*f*₁,*f*₂].

530: Determine a motor rotation speed dead zone based on the spectrum analysis.

In a test process, a vehicle jitter test is performed on a disturbance signal in the first frequency band, to obtain, through screening, a motor rotation speed disturbance component that does not cause vehicle jitter in the first frequency band. The motor rotation speed dead zone is obtained based on the motor rotation speed disturbance component that does not cause vehicle jitter in the first frequency band.

To facilitate understanding of the method in this embodiment of this application, the following describes in detail the method in this embodiment of this application with reference to FIG. 5. It should be noted that the following descriptions are merely for ease of understanding, and does not limit the protection scope of this application.

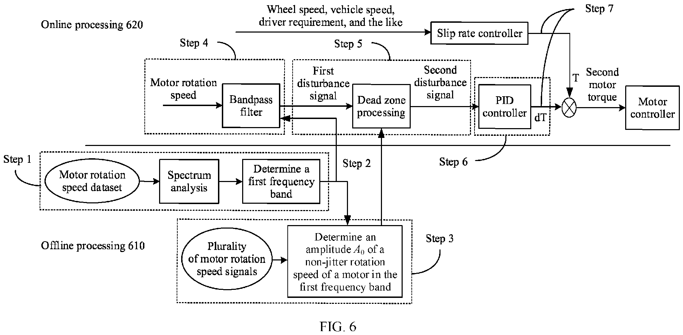

FIG. 6 is a flowchart of a method for determining a motor rotation speed dead zone according to another embodiment of this application. The method shown in FIG. 6 includes step 1 to step 7, and the seven steps may be classified into two processes: offline processing 610 and online processing 620. The offline processing 610 may be performed by a computing device, and includes step 1 to step 3. The online processing 620 may be performed by a VCU, and includes step 4 to step 7.

Step 1: Determine a first frequency band based on a disturbance signal of a motor.

A motor rotation speed dataset is obtained by collecting a rotation speed signal of a motor when a vehicle jitters in an anti-slip intervention process, and spectrum analysis is performed on the rotation speed signal in the motor rotation speed dataset based on Fourier transform.

Specifically, spectrum analysis is performed on the disturbance signal in the motor rotation speed dataset based on formulas $X \left(k\right) = {\sum }_{n = 0}^{N - 1} x \left(n\right) {W}_{N}^{kn}$ and ${W}_{N} = {e}^{- j \frac{2 π}{N}}$, where x(n) indicates a discrete disturbance signal in the motor rotation speed dataset, *k* = 0, 1, ..., or *N* -1, and *N* indicates a total quantity of disturbance signals in the motor rotation speed dataset.

A relationship between a spectrum amplitude and a frequency may be obtained based on the spectrum analysis: X(k)~kfₛ/N, where fₛ indicates a sampling frequency of the disturbance signal. Finally, it may be learned, through analysis based on the relationship, that a frequency band in which a spectrum attenuation section sharply increases is the first frequency band [*f*₁,*f*₂].

Step 2: Design a bandpass filter based on the first frequency band [*f*₁,*f*₂].

The bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$, where *Tₛ* indicates a sampling period for collecting a first disturbance signal, *f*₁ indicates a lower frequency limit of the first frequency band, and *f*₂ indicates an upper frequency limit of the first frequency band.

A discrete expression $G \left(s\right) = \frac{2 π \left({f}_{2}-{f}_{1}\right) \left(\frac{2}{{T}_{s}}\frac{1 - {z}^{- 1}}{1 + {z}^{- 1}}\right)}{{\left(\frac{2}{{T}_{s}}\frac{1 - {z}^{- 1}}{1 + {z}^{- 1}}\right)}^{2} + 2 π \left({f}_{2}-{f}_{1}\right) \left(\frac{2}{{T}_{s}}\frac{1 - {z}^{- 1}}{1 + {z}^{- 1}}\right) + {\left(2π\left({f}_{1}+{f}_{2}\right)\right)}^{2}}$ of the bandpass filtering function may be obtained by substituting a Laplacian transform operator s into the bandpass filtering function *G*(*s*), and filtering may be performed on a discrete rotation speed signal of the motor based on the discrete expression.

Step 3: Determine an amplitude *A*₀ of a non-jitter rotation speed of the motor in the first frequency band.

A plurality of rotation speed signals of the motor generated when a vehicle normally travels (does not jitter) are collected, and filtering is performed on the plurality of collected rotation speed signals by using the bandpass filter, to obtain a rotation speed signal component in the first frequency band. The rotation speed signal component in the first frequency band is analyzed to obtain an amplitude *A*₀ of a rotation speed signal that does not cause vehicle jitter in the first frequency band.

Step 4: Perform filtering on the rotation speed signal of the motor by using the bandpass filter, to obtain the first disturbance signal *W*₁.

Step 6: Obtain a motor rotation speed dead zone [*A*₁*,A*₀] in the first frequency band based on the amplitude *A*₀ of the non-jitter rotation speed of the motor in the first frequency band, and perform, based on the motor rotation speed dead zone [*A*₁,*A*₀], dead zone processing on the first disturbance signal *W*₁ to obtain a second disturbance signal *W*₂.

Dead zone processing is performed on the first disturbance signal *W*₁ based on the motor rotation speed dead zone [*-A*₁*,A*₀] by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂, where -*A*₁ indicates a lower amplitude limit of the motor rotation speed in the motor rotation speed dead zone, and *A*₀ indicates an upper amplitude limit of the motor rotation speed in the motor rotation speed dead zone.

Step 6: Input the second motor rotation speed disturbance signal into a PID controller, and calculate disturbance compensation torque *dT.*

The disturbance compensation torque *dT* is calculated based on the second disturbance signal *W₂* by using a formula $dT = {k}_{p} {W}_{2} + {k}_{i} {\int }_{{t}_{0}}^{t} {W}_{2} dt + {k}_{d} \frac{{dW}_{2}}{dt}$, where *kₚ* indicates a proportional adjustment coefficient of the PID controller, *kᵢ* indicates an integral adjustment coefficient of the PID controller, *k_{d}* indicates a derivative adjustment coefficient of the PID controller, *t*₀ indicates a lower time limit of a preset time period, and t indicates an upper time limit of the time period.

Step 7: Calculate first motor torque *T* by using a slip rate controller, and determine second motor torque *T^{*}* based on the first motor torque *T* and the compensation torque of the motor *dT.*

The first motor torque *T* is determined based on a slip rate of a wheel in the vehicle by using the slip rate controller. When the slip rate controller is a PID controller, after an actual slip rate of the driving wheel controlled by the motor is input into the slip rate controller, the first motor torque *T* may be calculated by using a formula $T = {k}_{{p}_{1}} {λ}_{e} + {k}_{{i}_{1}} {\int }_{{t}_{1}}^{{t}_{2}} {λ}_{e} dt + {k}_{{d}_{1}} \frac{{dλ}_{e}}{dt}$, where *k*_{*p*₁} indicates a proportional adjustment coefficient of the slip rate controller, *k*_{*i*₁} indicates an integral adjustment coefficient of the slip rate controller, *k*_{*d*₁} indicates a derivative adjustment coefficient of the slip rate controller, *t*₁ indicates a lower time limit of a preset time period, *t*₂ indicates an upper time limit of the time period, and *λₑ* indicates a difference between the actual slip rate and a target slip rate.

Then, the second motor torque *T^{*}* is calculated based on the first motor torque *T* and the disturbance compensation torque *dT* by using a formula *T^{*} = T + dT*. The second motor torque *T^{*}* may be understood as torque that needs to be provided by a motor controller for the driving wheel.

The foregoing describes the method in embodiments of this application with reference to FIG. 1 to FIG. 6. The following describes apparatuses in embodiments of this application with reference to FIG. 7 to FIG. 10. It should be noted that the apparatuses shown in FIG. 7 to FIG. 10 may implement one or more steps in the foregoing method. For brevity, details are not described herein again.

FIG. 7 is a schematic diagram of an anti-slip control apparatus according to an embodiment of this application. The apparatus 700 shown in FIG. 7 includes a filtering unit 710 and a processing unit 720.

The filtering unit 710 is configured to: obtain a rotation speed signal of a motor, and perform filtering processing on the rotation speed signal to obtain a first disturbance signal, where the first disturbance signal is a signal that causes motor rotation speed disturbance in the motor.

The processing unit 720 is configured to: perform, based on a pre-stored motor rotation speed dead zone, dead zone processing on the first disturbance signal obtained by the filtering unit, to obtain a second disturbance signal, where the motor rotation speed dead zone includes an amplitude of a non-jitter rotation speed signal in the rotation speed signal; calculate disturbance compensation torque of the motor based on the second disturbance signal; calculate first motor torque based on a slip rate of a driving wheel, where the driving wheel is a wheel driven by the motor; and compensate for the first motor torque by using the disturbance compensation torque, to obtain second motor torque, where the second motor torque is used by the motor to drive the driving wheel.

Optionally, in a specific embodiment, the processing unit is further configured to: perform, based on the pre-stored motor rotation speed dead zone [-*A*₁,*A*₀], dead zone processing on the first disturbance signal *W*₁ by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W₂,* where -*A*₁ indicates a lower amplitude limit of a motor rotation speed in the motor rotation speed dead zone, and *A*₀ indicates an upper amplitude limit of the motor rotation speed in the motor rotation speed dead zone.

Optionally, in a specific embodiment, the filtering unit is a bandpass filter.

Optionally, in a specific embodiment, the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$, where *Tₛ* indicates a sampling period for collecting the first disturbance signal, *f*₁ indicates a lower frequency limit of a frequency band in which the first disturbance signal is located, and *f*₂ indicates an upper frequency limit of the frequency band in which the first disturbance signal is located.

Optionally, in a specific embodiment, the processing unit is further configured to: calculate the disturbance compensation torque *dT* based on the second disturbance signal *W*₂ and a formula $dT = {k}_{p} {W}_{2} + {k}_{i} {\int }_{{t}_{0}}^{t} {W}_{2} dt + {k}_{d} \frac{{dW}_{2}}{dt}$, where *kₚ* indicates a proportional adjustment coefficient, *kᵢ* indicates an integral adjustment coefficient, *k_{d}* indicates a derivative adjustment coefficient, *t*₀ indicates a lower time limit of a preset time period, and *t* indicates an upper time limit of the time period.

Optionally, in a specific embodiment, the processing unit is further configured to: calculate the disturbance compensation torque *dT* based on the second disturbance signal *W*₂ by using formulas *dT* = -*J*(*ε ·* sgn(*S*) + *kS*) and $S = \frac{{dW}_{2}}{dt}$, where S indicates a switching function of sliding mode control, *J* indicates equivalent moment of inertia of a vehicle, and *ε* and *k* are parameters of the sliding mode control, where *ε* > 0, and *k* > 0.

In an optional embodiment, if the filtering unit 710 may be implemented by software, the anti-slip control apparatus may be a controller, for example, a VCU. In other words, the filtering unit and the processing unit may be processors in the controller.

If a function corresponding to the filtering unit 710 is implemented by hardware, a device that performs the method in embodiments of this application may be an anti-slip control system. FIG. 8 is a schematic block diagram of an anti-slip control system according to an embodiment of this application.

The anti-slip control system 800 shown in FIG. 8 may include a filter 840 and a controller 850. The filter is configured to implement the foregoing filtering function, for example, step 310. The controller 820 is configured to implement the foregoing functions such as dead zone processing and calculation, for example, step 320 to step 350.

Optionally, the controller 840 may specifically include a memory 810, a processor 820, and a communications interface 830. The memory 810, the processor 820, and the communications interface 830 are connected through an internal connection path. The memory 810 is configured to store instructions. The processor 820 is configured to execute the instructions stored in the memory 820, to control the input/output interface 830 to receive/send at least some parameters of a second channel model. Optionally, the memory 810 may be coupled to the processor 820 through an interface, or may be integrated with the processor 820.

It should be noted that the communications interface 830 implements communication between the communications device 800 and another device or a communications network by using, for example but not limited to, a transceiver apparatus such as a transceiver. The communications interface 830 may further include an input/output interface (input/output interface).

In an implementation process, the steps of the foregoing method may be performed by using an integrated logic circuit of hardware in the processor 820 or instructions in a form of software. The method disclosed with reference to embodiments of this application may be directly performed by a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 810. The processor 820 reads information from the memory 810, and performs the steps of the foregoing method in combination with the hardware of the processor. To avoid repetition, details are not described herein again.

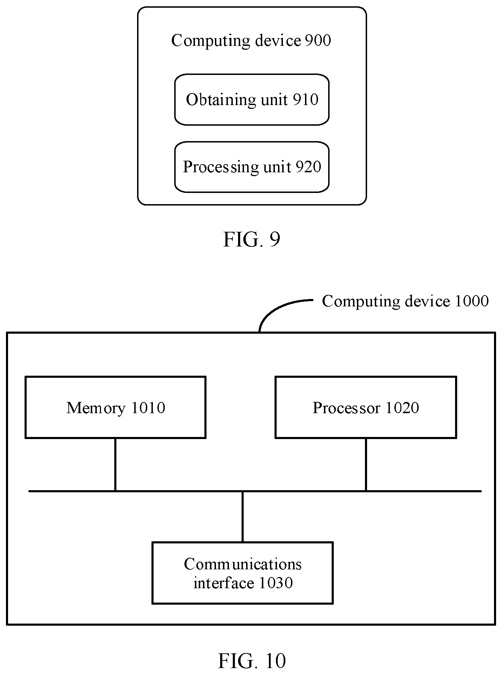

FIG. 9 is a schematic diagram of a computing device according to an embodiment of this application. The computing device 900 shown in FIG. 9 may implement one or more steps in the foregoing offline processing process. For brevity, details are not described herein again.

The computing apparatus 900 shown in FIG. 9 includes an obtaining unit 910 and a processing unit 920. The computing device 900 shown in FIG. 9 may be any apparatus having a computing device, for example, a server or a computer.

The obtaining unit 910 is configured to obtain a motor rotation speed dataset of a motor in a first frequency band, where the motor rotation speed dataset includes an amplitude of a non-jitter rotation speed signal in the first frequency band.

The processing unit 920 is configured to determine a motor rotation speed dead zone of the motor based on a motor rotation speed in the motor rotation speed dataset.

In this embodiment of this application, the motor rotation speed dead zone of the motor is determined based on the dataset in the first frequency band. In this way, when disturbance compensation torque of the motor is subsequently determined, the motor rotation speed dead zone may be used to perform dead zone processing on a first disturbance signal in the first frequency band, to eliminate a signal component of the first disturbance signal in the motor rotation speed dead zone. This helps improve accuracy of determining the disturbance compensation torque.

In a possible implementation, the obtaining unit 910 is further configured to collect a disturbance signal of the motor when a vehicle jitters, to obtain a motor rotation speed dataset; and the processing unit 920 is further configured to perform spectrum analysis on the disturbance signal in the motor rotation speed dataset, to determine the first frequency band [*f*₁,*f*₂].

In this embodiment of this application, spectrum analysis is performed on the disturbance signal in the motor rotation speed dataset, to determine the first frequency band. This helps improve accuracy of determining the first frequency band.

Optionally, spectrum analysis may be performed on the motor rotation speed in the motor rotation speed dataset through Fourier transform. In other words, spectrum analysis is performed on the disturbance signal in the motor rotation speed dataset based on formulas $X \left(k\right) = {\sum }_{n = 0}^{N - 1} x \left(n\right) {W}_{N}^{kn}$ and ${W}_{N} = {e}^{- j \frac{2 π}{N}}$, to obtain the first frequency band [*f*₁,*f*₂], where *x*(*n*) indicates a discrete disturbance signal in the motor rotation speed data set, *k* = 0, 1, ..., or *N* -1, and *N* indicates a total quantity of disturbance signals in the motor rotation speed dataset.

FIG. 10 is a schematic block diagram of a computing device according to another embodiment of this application. The computing device 1000 shown in FIG. 10 may include a memory 1010, a processor 1020, and a communications interface 1030. The memory 1010, the processor 1020, and the communications interface 1030 are connected through an internal connection path. The memory 1010 is configured to store instructions. The processor 1020 is configured to execute the instructions stored in the memory 1020, to control the input/output interface 1030 to receive/send at least some parameters of a second channel model. Optionally, the memory 1010 may be coupled to the processor 1020 through an interface, or may be integrated with the processor 1020.

It should be noted that the communications interface 1030 implements communication between the communications device 1000 and another device or a communications network by using, for example but not limited to, a transceiver apparatus such as a transceiver. The communications interface 1030 may further include an input/output interface (input/output interface).

In an implementation process, the steps of the foregoing method may be performed by using an integrated logic circuit of hardware in the processor 1020 or instructions in a form of software. The method disclosed with reference to embodiments of this application may be directly performed by a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1010. The processor 1020 reads information from the memory 1010, and performs the steps of the foregoing method in combination with hardware of the processor. To avoid repetition, details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that, in embodiments of this application, the memory may include a read-only memory and a random access memory, and provide instructions and data for the processor. A part of the processor may further include a nonvolatile random access memory. For example, the processor may further store information of a device type.

It should be noted that a term "and/or" describes an association relationship between associated objects and indicates that three relationships may exist. For example, A and/or B may indicate the following cases: Only A exists, both A and B exist, and only B exists. In addition, the character "/" generally represents an "or" relationship between the associated objects.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objective of the solutions of embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computing device (which may be a personal computer, a server, a network device, or the like) to perform all or some of the steps of the method described in embodiments of this application. The storage medium includes any medium that can store program code, such as a USB flash drive, a removable hard disk, a read-only memory (read-only memory, ROM), a random access memory (random access memory, RAM), a magnetic disk, or a compact disc.

## Claims

1. An anti-slip control method, comprising:
obtaining (310) a rotation speed signal of a motor, and performing filtering processing on the rotation speed signal to obtain a first disturbance signal, wherein the first disturbance signal is a signal that causes rotation speed disturbance in the motor;
performing (320), based on a pre-stored motor rotation speed dead zone, dead zone processing on the first disturbance signal to obtain a second disturbance signal, wherein the motor rotation speed dead zone comprises an amplitude of a non-jitter rotation speed signal in the rotation speed signal;
calculating (330) disturbance compensation torque of the motor based on the second disturbance signal;
calculating (340) first motor torque based on a slip rate of a driving wheel, wherein the driving wheel is a wheel driven by the motor; and
compensating (350) for the first motor torque by using the disturbance compensation torque, to obtain second motor torque, wherein the second motor torque is used by the motor to drive the driving wheel,
wherein the performing (320), based on a pre-stored motor rotation speed dead zone, dead zone processing on the first disturbance signal to obtain a second disturbance signal comprises:
performing, based on the motor rotation speed dead zone [-*A*₁,*A*₀], dead zone processing on the first disturbance signal *W*₁ by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂*,* wherein -*A*₁ indicates a lower amplitude limit of a motor rotation speed in the motor rotation speed dead zone, and *A*₀ indicates an upper amplitude limit of the motor rotation speed in the motor rotation speed dead zone.

2. The method according to claim 1, wherein the performing filtering processing on the rotation speed signal to obtain a first disturbance signal comprises:
performing filtering processing on the rotation speed signal by using a bandpass filter, to obtain the first disturbance signal.

3. The method according to claim 2, wherein the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$, wherein *Tₛ* indicates a sampling period for collecting the first disturbance signal, *f*₁ indicates a lower frequency limit of a frequency band in which the first disturbance signal is located, and *f*₂ indicates an upper frequency limit of the frequency band in which the first disturbance signal is located.

4. The method according to any one of claims 1 to 3, wherein the calculating (330) disturbance compensation torque of the motor based on the second disturbance signal comprises:
calculating the disturbance compensation torque *dT* based on the second disturbance signal *W*₂ by using a formula $dT = {k}_{p} {W}_{2} + {k}_{i} {\int }_{{t}_{0}}^{t} {W}_{2} dt + {k}_{d} \frac{{dW}_{2}}{dt}$, wherein *kₚ* indicates a proportional adjustment coefficient,*kᵢ* indicates an integral adjustment coefficient, *k_{d}* indicates a derivative adjustment coefficient, *t*₀ indicates a lower time limit of a preset time period, and t indicates an upper time limit of the time period.

5. The method according to any one of claims 1 to 3, wherein the calculating (330) disturbance compensation torque of the motor based on the second disturbance signal comprises:
calculating the disturbance compensation torque *dT* based on the second disturbance signal *W*₂ by using formulas *dT* = *J*(*ε ·* sgn(*S*) *+ kS*) and $S = \frac{{dW}_{2}}{dt}$, wherein S indicates a switching function of sliding mode control, *J* indicates equivalent moment of inertia of a vehicle, and *ε* and *k* are parameters of the sliding mode control, wherein *ε* > 0, and *k >* 0.

6. An anti-slip control apparatus (700), comprising:
a filtering unit (710), configured to: obtain a rotation speed signal of a motor, and perform filtering processing on the rotation speed signal to obtain a first disturbance signal, wherein the first disturbance signal is a signal that causes motor rotation speed disturbance in the motor; and
a processing unit (720), configured to:
perform, based on a pre-stored motor rotation speed dead zone, dead zone processing on the first disturbance signal obtained by the filtering unit, to obtain a second disturbance signal, wherein the motor rotation speed dead zone comprises an amplitude of a non-jitter rotation speed signal in the rotation speed signal;
calculate disturbance compensation torque of the motor based on the second disturbance signal;
calculate first motor torque based on a slip rate of a driving wheel, wherein the driving wheel is a wheel driven by the motor; and
compensate for the first motor torque by using the disturbance compensation torque, to obtain second motor torque, wherein the second motor torque is used by the motor to drive the driving wheel,
wherein the processing unit (720) is further configured to:
perform, based on the pre-stored motor rotation speed dead zone [-*A*₁,*A*₀], dead zone processing on the first disturbance signal *W*₁ by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W₂*, wherein -*A*₁ indicates a lower amplitude limit of a motor rotation speed in the motor rotation speed dead zone, and *A*₀ indicates an upper amplitude limit of the motor rotation speed in the motor rotation speed dead zone.

7. The apparatus (700) according to claim 6, wherein the filtering unit is a bandpass filter.

8. The apparatus (700) according to claim 7, wherein the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$, wherein *Tₛ* indicates a sampling period for collecting the first disturbance signal, *f*₁ indicates a lower frequency limit of a frequency band in which the first disturbance signal is located, and *f*₂ indicates an upper frequency limit of the frequency band in which the first disturbance signal is located.

9. The apparatus (700) according to any one of claims 6 to 8, wherein the processing unit (720) is further configured to:
calculate the disturbance compensation torque *dT* based on the second disturbance signal *W*₂ and a formula $dT = {k}_{p} {W}_{2} + {k}_{i} {\int }_{{t}_{0}}^{t} {W}_{2} dt + {k}_{d} \frac{{dW}_{2}}{dt}$,wherein *kₚ* indicates a proportional adjustment coefficient, *kᵢ* indicates an integral adjustment coefficient, *k_{d}* indicates a derivative adjustment coefficient, *t*₀ indicates a lower time limit of a preset time period, and t indicates an upper time limit of the time period.

10. The apparatus (700) according to any one of claims 6 to 8, wherein the processing unit (720) is further configured to:
calculate the disturbance compensation torque *dT* based on the second disturbance signal *W₂* by using formulas *dT = -J*(*ε* · sgn(*S*) + *kS*) and $S = \frac{{dW}_{2}}{dt}$, wherein S indicates a switching function of sliding mode control, *J* indicates equivalent moment of inertia of a vehicle, and *ε* and *k* are parameters of the sliding mode control, wherein *ε* > 0, and *k >* 0.

11. An anti-slip control system (800), comprising:
a filter (840), configured to: obtain a rotation speed signal of a motor, and perform filtering processing on the rotation speed signal to obtain a first disturbance signal, wherein the first disturbance signal is a signal that causes rotation speed disturbance in the motor; and
a controller (850), configured to:
perform, based on a pre-stored motor rotation speed dead zone, dead zone processing on the first disturbance signal that is output by the filter, to obtain a second disturbance signal, wherein the motor rotation speed dead zone comprises an amplitude of a non-jitter rotation speed signal in the rotation speed signal;
obtain the second disturbance signal based on a processor, and calculate disturbance compensation torque of the motor;
calculate first motor torque based on a slip rate of a driving wheel, wherein the driving wheel is a wheel driven by the motor; and
compensate for the first motor torque by using the disturbance compensation torque, to obtain second motor torque, wherein the second motor torque is used by the motor to drive the driving wheel,
wherein the controller (850) is further configured to:
perform, based on the pre-stored motor rotation speed dead zone [-*A*₁,*A*₀], dead zone processing on the first disturbance signal *W*₁ by using a formula ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, to obtain the second disturbance signal *W*₂, wherein -*A*₁ indicates a lower amplitude limit of a motor rotation speed in the motor rotation speed dead zone, and *A*₀ indicates an upper amplitude limit of the motor rotation speed in the motor rotation speed dead zone.

12. The system (800) according to claim 11, wherein the filter (840) is a bandpass filter.

13. The system (800) according to claim 12, wherein the bandpass filter meets $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, and $s = \frac{2}{{T}_{s}} \frac{1 - {z}^{- 1}}{1 + {z}^{- 1}}$, wherein *Tₛ* indicates a sampling period for collecting the first disturbance signal, *f*₁ indicates a lower frequency limit of a frequency band in which the first disturbance signal is located, and *f*₂ indicates an upper frequency limit of the frequency band in which the first disturbance signal is located.

14. The system (800) according to any one of claims 11 to 13, wherein the controller (850) is further configured to:
calculate the disturbance compensation torque *dT* based on the second disturbance signal *W*₂ by using a formula $dT = {k}_{p} {W}_{2} + {k}_{i} {\int }_{{t}_{0}}^{t} {W}_{2} dt + {k}_{d} \frac{{dW}_{2}}{dt}$, wherein *kₚ* indicates a proportional adjustment coefficient, *kᵢ* indicates an integral adjustment coefficient, *k_{d}* indicates a derivative adjustment coefficient, *t*₀ indicates a lower time limit of a preset time period, and t indicates an upper time limit of the time period.

15. The system (800) according to any one of claims 11 to 13, wherein the controller (850) is further configured to:
calculate the disturbance compensation torque *dT* based on the second disturbance signal *W*₂ by using formulas *dT = -J*(*ε* · sgn(*S*) + *kS*) and $S = \frac{{dW}_{2}}{dt}$, wherein S indicates a switching function of sliding mode control, *J* indicates equivalent moment of inertia of a vehicle, and *ε* and *k* are parameters of the sliding mode control, wherein *ε* > 0, and *k >* 0.

## Patentansprüche

1. Verfahren für eine Antriebsschlupfregelung, umfassend:
Erhalten (310) eines Drehzahlsignals eines Motors und Durchführen einer Filterverarbeitung an dem Drehzahlsignal, um ein erstes Störsignal zu erhalten, wobei das erste Störsignal ein Signal ist, das eine Drehzahlstörung in dem Motor verursacht;
Durchführen (320), basierend auf einer vorab gespeicherten Motordrehzahltotzone, einer Totzonenverarbeitung an dem ersten Störsignal, um ein zweites Störsignal zu erhalten, wobei die Motordrehzahltotzone eine Amplitude eines jitterfreien Drehzahlsignals in dem Drehzahlsignal umfasst;
Berechnen (330) eines Störgrößenkompensationsdrehmoments des Motors basierend auf dem zweiten Störsignal;
Berechnen (340) eines ersten Motordrehmoments basierend auf einer Schlupfrate eines Antriebsrads, wobei das Antriebsrad ein von dem Motor angetriebenes Rad ist; und
Kompensieren (350) des ersten Motordrehmoments, indem das Störgrößenkompensationsdrehmoment verwendet wird, um ein zweites Motordrehmoment zu erhalten, wobei das zweite Motordrehmoment von dem Motor verwendet wird, um das Antriebsrad anzutreiben,
wobei das Durchführen (320), basierend auf einer vorab gespeicherten Motordrehzahltotzone, einer Totzonenverarbeitung an dem ersten Störsignal, um ein zweites Störsignal zu erhalten, umfasst:
Durchführen, basierend auf der Motordrehzahltotzone [-A₁, A₀], einer Totzonenverarbeitung an dem ersten Störsignal W₁, indem eine Formel ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$ verwendet wird, um das zweite Störsignal W₂ zu erhalten, wobei -A₁ eine untere Amplitudengrenze einer Motordrehzahl in der Motordrehzahltotzone anzeigt und A₀ eine obere Amplitudengrenze der Motordrehzahl in der Motordrehzahltotzone anzeigt.

2. Verfahren nach Anspruch 1, wobei das Durchführen einer Filterverarbeitung an dem
Drehzahlsignal, um ein erstes Störsignal zu erhalten, umfasst: Durchführen einer Filterverarbeitung an dem Drehzahlsignal, indem ein Bandpassfilter
verwendet wird, um das erste Störsignal zu erhalten.

3. Verfahren nach Anspruch 2, wobei der Bandpassfilter $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$ und $s = \frac{2}{{T}_{s}} \frac{1 - {z}^{- 1}}{1 + {z}^{- 1}}$ erfüllt, wobei T_{S} eine Abtastperiode zum Sammeln des ersten Störsignals anzeigt, f₁ eine untere Frequenzgrenze eines Frequenzbands anzeigt, in dem sich das erste Störsignal befindet, und f*₂* eine obere Frequenzgrenze des Frequenzbands anzeigt, in dem sich das erste Störsignal befindet.

4. Verfahren nach einem der Ansprüche 1 bis 3, wobei das Berechnen (330) des Störgrößenkompensationsdrehmoments des Motors basierend auf dem zweiten Störsignal umfasst:
Berechnen des Störgrößenkompensationsdrehmoments dT basierend auf dem zweiten Störsignal W₂, indem eine Formel $dT = {k}_{p} {W}_{2} + {k}_{i} {\int }_{{t}_{0}}^{t} {W}_{2} dt + {k}_{d} \frac{{dW}_{2}}{dt}$ verwendet wird, wobei kₚ einen proportionalen Anpassungskoeffizienten anzeigt, kᵢ einen integralen Anpassungskoeffizienten anzeigt, k_{d} einen abgeleiteten Anpassungskoeffizienten anzeigt, t₀ eine untere Zeitgrenze eines voreingestellten Zeitraums anzeigt und t eine obere Zeitgrenze des Zeitraums anzeigt.

5. Verfahren nach einem der Ansprüche 1 bis 3, wobei das Berechnen (330) des Störgrößenkompensationsdrehmoments des Motors basierend auf dem zweiten Störsignal umfasst:
Berechnen des Störgrößenkompensationsdrehmoments dT basierend auf dem zweiten Störsignal W₂, indem die Formeln dT = -J(ε · sgn(S) + kS) und $S = \frac{{dW}_{2}}{dt}$ verwendet werden, wobei S eine Schaltfunktion der Gleitmodusregelung anzeigt, J ein äquivalentes Trägheitsmoment eines Fahrzeugs anzeigt und ε und k Parameter der Gleitmodusregelung sind, wobei ε > 0 und k > 0 sind.

6. Einrichtung für eine Antriebsschlupfregelung (700), umfassend:
eine Filtereinheit (710), die konfiguriert ist zum Erhalten eines Drehzahlsignals eines Motors und zum Durchführen einer Filterverarbeitung an dem Drehzahlsignal, um ein erstes Störsignal zu erhalten, wobei das erste Störsignal ein Signal ist, das eine Motordrehzahlstörung in dem Motor verursacht; und
eine Verarbeitungseinheit (720), die konfiguriert ist zum:
Durchführen, basierend auf einer vorab gespeicherten Motordrehzahltotzone, einer Totzonenverarbeitung an dem ersten Störsignal, das durch die Filtereinheit erhalten wird, um ein zweites Störsignal zu erhalten, wobei die Motordrehzahltotzone eine Amplitude eines jitterfreien Drehzahlsignals in dem Drehzahlsignal umfasst;
Berechnen eines Störgrößenkompensationsdrehmoments des Motors basierend auf dem zweiten Störsignal;
Berechnen eines ersten Motordrehmoments basierend auf einer Schlupfrate eines Antriebsrads, wobei das Antriebsrad ein von dem Motor angetriebenes Rad ist; und
Kompensieren des ersten Motordrehmoments, indem das Störgrößenkompensationsdrehmoment verwendet wird, um ein zweites Motordrehmoment zu erhalten, wobei das zweite Motordrehmoment von dem Motor verwendet wird, um das Antriebsrad anzutreiben,
wobei die Verarbeitungseinheit (720) außerdem konfiguriert ist zum: Durchführen, basierend auf der vorab gespeicherten Motordrehzahltotzone [-A₁, A₀], einer Totzonenverarbeitung an dem ersten Störsignal W₁, indem eine Formel ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$ verwendet wird, um das zweite Störsignal W₂ zu erhalten, wobei -A₁ eine untere Amplitudengrenze einer Motordrehzahl in der Motordrehzahltotzone anzeigt und A₀ eine obere Amplitudengrenze der Motordrehzahl in der Motordrehzahltotzone anzeigt.

7. Einrichtung (700) nach Anspruch 6, wobei die Filtereinheit ein Bandpassfilter ist.

8. Einrichtung (700) nach Anspruch 7, wobei der Bandpassfilter $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$ und $s = \frac{2}{{T}_{s}} \frac{1 - {z}^{- 1}}{1 + {z}^{- 1}}$ erfüllt, wobei T_{S} eine Abtastperiode zum Sammeln des ersten Störsignals anzeigt, f₁ eine untere Frequenzgrenze eines Frequenzbands anzeigt, in dem sich das erste Störsignal befindet, und f₂ eine obere Frequenzgrenze des Frequenzbands anzeigt, in dem sich das erste Störsignal befindet.

9. Einrichtung (700) nach einem der Ansprüche 6 bis 8, wobei die Verarbeitungseinheit (720) ferner konfiguriert ist zum:
Berechnen des Störgrößenkompensationsdrehmoments dT basierend auf dem zweiten Störsignal W₂ und einer Formel 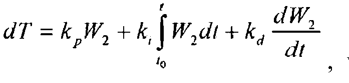 wobei kₚ einen proportionalen Anpassungskoeffizienten anzeigt, kᵢ einen integralen Anpassungskoeffizienten anzeigt, k_{d} einen abgeleiteten Anpassungskoeffizienten anzeigt, t₀ eine untere Zeitgrenze eines voreingestellten Zeitraums anzeigt und t eine obere Zeitgrenze des Zeitraums anzeigt.

10. Einrichtung (700) nach einem der Ansprüche 6 bis 8, wobei die Verarbeitungseinheit (720) ferner konfiguriert ist zum:
Berechnen des Störgrößenkompensationsdrehmoments dT basierend auf dem zweiten Störsignal W₂, indem die Formeln dT = -J(ε · sgn(S) + kS) und $S = \frac{{dW}_{2}}{dt}$ verwendet werden, wobei S eine Schaltfunktion der Gleitmodusregelung anzeigt, J ein äquivalentes Trägheitsmoment eines Fahrzeugs anzeigt und ε und k Parameter der Gleitmodusregelung sind, wobei ε > 0 und k > 0 sind.

11. System für eine Antriebsschlupfregelung (800), umfassend:
einen Filter (840), der konfiguriert ist zum: Erhalten eines Drehzahlsignals eines Motors und zum Durchführen einer Filterverarbeitung an dem Drehzahlsignal, um ein erstes Störsignal zu erhalten, wobei das erste Störsignal ein Signal ist, das in dem Motor eine Drehzahlstörung verursacht; und
eine Steuereinheit (850), die konfiguriert ist zum:
Durchführen, basierend auf einer vorab gespeicherten Motordrehzahltotzone, einer Totzonenverarbeitung an dem ersten Störsignal, das von dem Filter ausgegeben wird, um ein zweites Störsignal zu erhalten, wobei die Motordrehzahltotzone eine Amplitude eines jitterfreien Drehzahlsignals in dem Drehzahlsignal umfasst;
Erhalten des zweiten Störsignals basierend auf einem Prozessor und Berechnen eines Störgrößenkompensationsdrehmoments des Motors;
Berechnen eines ersten Motordrehmoments basierend auf einer Schlupfrate eines Antriebsrads, wobei das Antriebsrad ein von dem Motor angetriebenes Rad ist; und
Kompensieren des ersten Motordrehmoments, indem das Störgrößenkompensationsdrehmoment verwendet wird, um ein zweites Motordrehmoment zu erhalten, wobei das zweite Motordrehmoment von dem Motor verwendet wird, um das Antriebsrad anzutreiben,
wobei die Steuereinheit (850) außerdem konfiguriert ist zum
Durchführen, basierend auf der vorab gespeicherten Motordrehzahltotzone [-A₁, A₀], einer
Totzonenverarbeitung an dem ersten Störsignal W₁, indem eine Formel ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$ verwendet wird, um das zweite Störsignal W₂ zu erhalten, wobei -A₁ eine untere Amplitudengrenze einer Motordrehzahl in der Motordrehzahltotzone anzeigt und A₀ eine obere Amplitudengrenze der Motordrehzahl in der Motordrehzahltotzone anzeigt.

12. System (800) nach Anspruch 11, wobei der Filter (840) ein Bandpassfilter ist.

13. System (800) nach Anspruch 12, wobei der Bandpassfilter $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, und $s = \frac{2}{{T}_{s}} \frac{1 - {z}^{- 1}}{1 + {z}^{- 1}}$ erfüllt, wobei T_{S} eine Abtastperiode zum Sammeln des ersten Störsignals anzeigt, f₁ eine untere Frequenzgrenze eines Frequenzbands anzeigt, in dem sich das erste Störsignal befindet, und f₂ eine obere Frequenzgrenze des Frequenzbands anzeigt, in dem sich das erste Störsignal befindet.

14. System (800) nach einem der Ansprüche 11 bis 13, wobei die Steuereinheit (850) ferner konfiguriert ist zum:
Berechnen des Störgrößenkompensationsdrehmoments dT basierend auf dem zweiten Störsignal W₂, indem eine Formel 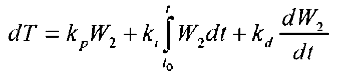 verwendet wird, wobei kₚ einen proportionalen Anpassungskoeffizienten anzeigt, kᵢ einen integralen Anpassungskoeffizienten anzeigt, k_{d} einen abgeleiteten Anpassungskoeffizienten anzeigt, t₀ eine untere Zeitgrenze eines voreingestellten Zeitraums anzeigt und t eine obere Zeitgrenze des Zeitraums anzeigt.

15. System (800) nach einem der Ansprüche 11 bis 13, wobei die Steuereinheit (850) ferner konfiguriert ist zum:
Berechnen des Störgrößenkompensationsdrehmoments dT basierend auf dem zweiten Störsignal W₂, indem die Formeln dT = -J(ε · sgn(S) + kS) und $S = \frac{{dW}_{2}}{dt}$ verwendet werden, wobei S eine Schaltfunktion der Gleitmodusregelung anzeigt, J ein äquivalentes Trägheitsmoment eines Fahrzeugs anzeigt und ε und k Parameter der Gleitmodusregelung sind, wobei ε > 0 und k > 0 sind.

## Revendications

1. Procédé de commande antipatinage comprenant :
l'obtention (310) d'un signal de vitesse de rotation d'un moteur, et la réalisation d'un traitement de filtrage sur le signal de vitesse de rotation pour obtenir un premier signal de perturbation, le premier signal de perturbation étant un signal qui entraîne une perturbation de vitesse de rotation dans le moteur ;
la réalisation (320), sur la base d'une zone morte de vitesse de rotation de moteur pré-stockée, d'un traitement de zone morte sur le premier signal de perturbation pour obtenir un deuxième signal de perturbation, la zone morte de vitesse de rotation de moteur comprenant une amplitude d'un signal de vitesse de rotation sans gigue dans le signal de vitesse de rotation ;
le calcul (330) du couple de compensation de perturbation du moteur sur la base du deuxième signal de perturbation ;
le calcul (340) d'un premier couple moteur sur la base d'un taux de patinage d'une roue motrice, la roue motrice étant une roue entraînée par le moteur ; et
la compensation (350) du premier couple moteur en utilisant le couple de compensation de perturbation, pour obtenir un deuxième couple moteur, le deuxième couple moteur étant utilisé par le moteur pour entraîner la roue motrice,
dans lequel la réalisation (320), sur la base d'une zone morte de vitesse de rotation du moteur pré-stockée, d'un traitement de zone morte sur le premier signal de perturbation pour obtenir un deuxième signal de perturbation comprend :
la réalisation, sur la base de la zone morte de vitesse de rotation de moteur [-A₁, A₀], d'un traitement de zone morte sur le premier signal de perturbation W₁ en utilisant une formule ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, pour obtenir le deuxième signal de perturbation W₂, où -A₁ indique une limite d'amplitude inférieure d'une vitesse de rotation de moteur dans la zone morte de vitesse de rotation de moteur, et A₀ indique une limite d'amplitude supérieure de la vitesse de rotation de moteur dans la zone morte de rotation de moteur.

2. Procédé selon la revendication 1, dans lequel la réalisation d'un traitement de filtrage sur le signal de vitesse de rotation pour obtenir un premier signal de perturbation comprend :
la réalisation d'un traitement de filtrage du signal de vitesse de rotation en utilisant un filtre passe-bande, pour obtenir le premier signal de perturbation.

3. Procédé selon la revendication 2, dans lequel le filtre passe-bande répond à $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, et $s = \frac{2}{{T}_{s}} \frac{1 - {z}^{- 1}}{1 + {z}^{- 1}}$ où Ts indique une période d'échantillonnage pour collecter le premier signal de perturbation, f₁ indique une limite de fréquence inférieure d'une bande de fréquence dans laquelle le premier signal de perturbation est situé, et f₂ indique une limite de fréquence supérieure de la bande de fréquence dans laquelle le premier signal de perturbation est situé.

4. Procédé selon l'une quelconque des revendications 1 à 3, dans lequel le calcul (330) du couple de compensation de perturbation du moteur sur la base du deuxième signal de perturbation comprend :
le calcul du couple de compensation de perturbation dT sur la base du deuxième signal de perturbation W₂ en utilisant une formule 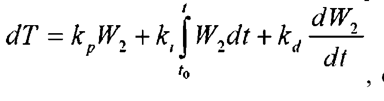 où kₚ indique un coefficient d'ajustement proportionnel, kᵢ indique un coefficient d'ajustement intégral, k_{d} indique un coefficient d'ajustement dérivé, t₀ indique une limite de temps inférieure d'une période de temps prédéfinie, et t indique une limite de temps supérieure de la période de temps.

5. Procédé selon l'une quelconque des revendications 1 à 3, dans lequel le calcul (330) du couple de compensation de perturbation du moteur sur la base du deuxième signal de perturbation comprend :
le calcul du couple de compensation de perturbation dT sur la base du deuxième signal de perturbation W₂ en utilisant les formules dT = -J(ε · sgn(S) + kS) et $S = \frac{{dW}_{2}}{dt}$, où S indique une fonction de commutation de la commande par mode de glissement, J indique un moment d'inertie équivalent d'un véhicule, et ε et k sont des paramètres de la commande par mode de glissement, où ε > 0 et k > 0.

6. Appareil de commande antipatinage (700), comprenant :
une unité de filtrage (710), configurée pour : obtenir un signal de vitesse de rotation d'un moteur, et réaliser un traitement de filtrage sur le signal de vitesse de rotation afin d'obtenir un premier signal de perturbation, le premier signal de perturbation étant un signal qui entraîne une perturbation de vitesse de rotation de moteur dans le moteur ; et
une unité de traitement (720), configurée pour :
réaliser, sur la base d'une zone morte de vitesse de rotation de moteur pré-stockée, un traitement de zone morte sur le premier signal de perturbation obtenu par l'unité de filtrage, pour obtenir un deuxième signal de perturbation, la zone morte de vitesse de rotation de moteur comprenant une amplitude d'un signal de vitesse de rotation sans gigue dans le signal de vitesse de rotation ;
calculer le couple de compensation de perturbation du moteur sur la base du deuxième signal de perturbation ;
calculer un premier couple moteur sur la base d'un taux de patinage d'une roue motrice, la roue motrice étant une roue entraînée par le moteur ; et
compenser le premier couple moteur en utilisant le couple de compensation de perturbation, pour obtenir un deuxième couple moteur, le deuxième couple moteur étant utilisé par le moteur pour entraîner la roue motrice,
dans lequel l'unité de traitement (720) est en outre configurée pour :
réaliser, sur la base de la zone morte de vitesse de rotation de moteur [-A₁, A₀] pré-stockée, d'un traitement de zone morte sur le premier signal de perturbation W₁ en utilisant une formule ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, pour obtenir le deuxième signal de perturbation W₂, où -A₁ indique une limite d'amplitude inférieure d'une vitesse de rotation de moteur dans la zone morte de vitesse de rotation de moteur, et A₀ indique une limite d'amplitude supérieure de la vitesse de rotation de moteur dans la zone morte de rotation de moteur.

7. Appareil (700) selon la revendication 6, l'unité de filtrage étant un filtre passe-bande.

8. Appareil (700) selon la revendication 7, dans lequel le filtre passe-bande répond à $G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, et $s = \frac{2}{{T}_{s}} \frac{1 - {z}^{- 1}}{1 + {z}^{- 1}}$ où T_{S} indique une période d'échantillonnage pour collecter le premier signal de perturbation, f₁ indique une limite de fréquence inférieure d'une bande de fréquence dans laquelle le premier signal de perturbation est situé, et f₂ indique une limite de fréquence supérieure de la bande de fréquence dans laquelle le premier signal de perturbation est situé.

9. Appareil (700) selon l'une quelconque des revendications 6 à 8, dans lequel l'unité de traitement (720) est en outre configurée pour :
calculer le couple de compensation de perturbation dT sur la base du deuxième signal de perturbation W₂ et d'une formule 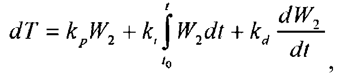 où kₚ indique un coefficient d'ajustement proportionnel, kᵢ indique un coefficient d'ajustement intégral, k_{d} indique un coefficient d'ajustement dérivé, t₀ indique une limite de temps inférieure d'une période de temps prédéfinie, et t indique une limite de temps supérieure de la période de temps.

10. Appareil (700) selon l'une quelconque des revendications 6 à 8, dans lequel l'unité de traitement (720) est en outre configurée pour :
calculer le couple de compensation de perturbation dT sur la base du deuxième signal de perturbation W₂ en utilisant les formules dT = -J(ε · sgn(S) + kS) et $S = \frac{{dW}_{2}}{dt}$, où S indique une fonction de commutation de la commande par mode de glissement, J indique un moment d'inertie équivalent d'un véhicule, et ε et k sont des paramètres de la commande par mode de glissement, où ε > 0 et k > 0.

11. Système de commande antipatinage (800), comprenant :
un filtre (840), configurée pour : obtenir un signal de vitesse de rotation d'un moteur, et réaliser un traitement de filtrage sur le signal de vitesse de rotation afin d'obtenir un premier signal de perturbation, le premier signal de perturbation étant un signal qui entraîne une perturbation de vitesse de rotation dans le moteur ; et
un contrôleur (850), configuré pour :
réaliser, sur la base d'une zone morte de vitesse de rotation de moteur pré-stockée, un traitement de zone morte sur le premier signal de perturbation qui est délivré par le filtre, pour obtenir un deuxième signal de perturbation, la zone morte de vitesse de rotation de moteur comprenant une amplitude d'un signal de vitesse de rotation sans gigue dans le signal de vitesse de rotation ;
obtenir le deuxième signal de perturbation sur la base d'un processeur, et calculer le couple de compensation de perturbation du moteur ;
calculer un premier couple moteur sur la base d'un taux de patinage d'une roue motrice, la roue motrice étant une roue entraînée par le moteur ; et
compenser le premier couple moteur en utilisant le couple de compensation de perturbation, pour obtenir un deuxième couple moteur, le deuxième couple moteur étant utilisé par le moteur pour entraîner la roue motrice,
dans lequel le contrôleur (850) est en outre configuré pour :
réaliser, sur la base de la zone morte de vitesse de rotation de moteur [-A₁, A₀] pré-stockée, d'un traitement de zone morte sur le premier signal de perturbation W₁ en utilisant une formule ${W}_{2} = \left\{\begin{matrix}{W}_{1} - {A}_{0} , {W}_{1} > {A}_{0} \\ 0 , - {A}_{1} \leq {W}_{1} \leq {A}_{0} \\ {W}_{1} + {A}_{1} , {W}_{1} < - {A}_{1}\end{matrix}\right.$, pour obtenir le deuxième signal de perturbation W₂, où -A₁ indique une limite d'amplitude inférieure d'une vitesse de rotation de moteur dans la zone morte de vitesse de rotation de moteur, et A₀ indique une limite d'amplitude supérieure de la vitesse de rotation de moteur dans la zone morte de rotation de moteur.

12. Système (800) selon la revendication 11, dans lequel le filtre (840) est un filtre passe-bande.

13. Système (800) selon la revendication 12, dans lequel le filtre passe-bande répond à
$G \left(s\right) = \frac{2 π \left({f}_{2}-{f}_{1}\right) s}{{s}^{2} + 2 π \left({f}_{2}-{f}_{1}\right) s + {\left(2π\left({f}_{1}+{f}_{2}\right)\right)}^{2}}$, et $s = \frac{2}{{T}_{s}} \frac{1 - {z}^{- 1}}{1 + {z}^{- 1}}$ où T_{S} indique une période d'échantillonnage pour collecter le premier signal de perturbation, f₁ indique une limite de fréquence inférieure d'une bande de fréquence dans laquelle le premier signal de perturbation est situé, et f₂ indique une limite de fréquence supérieure de la bande de fréquence dans laquelle le premier signal de perturbation est situé.

14. Système (800) selon l'une quelconque des revendications 11 à 13, dans lequel le contrôleur (850) est en outre configuré pour :
calculer le couple de compensation de perturbation dT sur la base du deuxième signal de perturbation W₂ en utilisant une formule $dT = {k}_{p} {W}_{2} + {k}_{i} {\int }_{{t}_{0}}^{t} {W}_{2} dt + {k}_{d} \frac{{dW}_{2}}{dt}$, où kₚ indique un coefficient d'ajustement proportionnel, kᵢ indique un coefficient d'ajustement intégral, k_{d} indique un coefficient d'ajustement dérivé, t₀ indique une limite de temps inférieure d'une période de temps prédéfinie, et t indique une limite de temps supérieure de la période de temps.

15. Système (800) selon l'une quelconque des revendications 11 à 13, dans lequel le contrôleur (850) est en outre configuré pour :
calculer le couple de compensation de perturbation dT sur la base du deuxième signal de perturbation W₂ en utilisant les formules dT = -J(ε · sgn(S) + kS) et $S = \frac{{dW}_{2}}{dt}$, où S indique une fonction de commutation de la commande par mode de glissement, J indique un moment d'inertie équivalent d'un véhicule, et ε et k sont des paramètres de la commande par mode de glissement, où ε > 0 et k > 0.
